# EUROPEAN PATENT SPECIFICATION

(11) **EP 0 781 826 B1**
(45) Date of publication and mention of the grant of the patent: **07.03.2001**
(21) Application number: 96120066.4
(22) Date of filing: 13.12.1996
(51) Int. Cl.: C09K 19/30, C09K 19/42, G02F 1/139, G02F 1/1335, C09K 19/02

(54) **Liquid crystal display element and liquid crystal composition**
Flüssigkristallanzeigeelement und Flüssigkristallzusammensetzung
Elément d'affichage à cristaux liquides et composition liquide cristalline

(30) Priority: 27.12.1995 JP 35370395
(43) Date of publication of application: 02.07.1997
(73) Proprietor: CHISSO CORPORATION, Osaka (JP)
(72) Inventor: Muraoka, Toshihiko, Kumamotoshi, Kumamotoken (JP); Murashiro, Katsuyuki, Ichiharashi, Chibaken (JP); Takeshita, Fusayuki, Kimitsushi, Chibaken (JP); Matsushita, Tetsuya, Sodegaurashi, Chibaken (JP); Nakagawa, Etsuo, Ichiharashi, Chibaken (JP)
(74) Representative: Hansen, Bernd, Dr. Dipl.-Chem.

(56) References cited:
- EP-A- 0 628 532
- EP-A- 0 656 412
- EP-A- 0 675 187
- WO-A-91/11497
- WO-A-92/18583
- WO-A-93/01253
- JAPANESE JOURNAL OF APPLIED PHYSICS, vol. 34, no. 2A, 1 February 1995, pages L177-L179, XP000600430 MIYASHITA T ET AL: "WIDE-VIEWING-ANGLE DISPLAY MODE USING BEND-ALIGNMENT LIQUID CRYSTAL CELL"
- SID INTERNATIONAL SYMPOSIUM - DIGEST OF TECHNICAL PAPERS, SEATTLE, MAY 16 - 21, 1993, vol. 24 PART 1, 16 May 1993, SOCIETY FOR INFORMATION DISPLAY, pages 277-280, XP000470757 YAMAGUCHI Y ET AL: "WIDE-VIEWING-ANGLE DISPLAY MODE FOR THE ACTIVE-MATRIX LCD USING BEND-ALIGNMENT LIQUID-CRYSTAL CELI"
- IEICE TRANSACTIONS ON ELECTRONICS, vol. E79-C, no. 8, August 1996, pages 1076-1082, XP000632426 MIYASHITA T ET AL: "OPTICALLY COMPENSATED BEND MODE (OCB MODE) WITH WIDE VIEWING ANGLE AND FAST RESPONSE"

## Description

The present invention relates to a liquid crystal display element based on an OCB mode using a nematic liquid crystal composition.

### Background Art

A liquid crystal cell presently used for an active matrix LCD (AM-LCD) such as a thin film transistor (TFT) which is widely realized as a display method of a liquid crystal display element (LCD) is a twist nematic (TN) cell. An active matrix (AM-LCD) method using the said twist nematic (TN) cell is improved in its display quality compared to the conventional display methods but is still inferior to CRT about a viewing angle and a response time.

Recently, an OCB (Optically Compensated Bend or Birefringence) mode has been proposed and noticed [by Y.Yamaguchi, T.Miyashita, T.Uchida, SID 93 DIGEST, 1993: Late-News Paper; Wide-Viewing-Angle Di splay Mode for the Active-Matrix Lcd Using Bend-Alignment Liquid-Crystal Cell, page 277 et seq.; by T.Miyashita, C.-L.Kuo, M.Suzuki, T.Uchida, SID 95 DIGEST, 1995: Properties of the OCB Mode for Active-Matrix LCDs with Wide Viewing Angle, page 797 et seq.].

A liquid crystal composition used for a liquid crystal display element of AM-LCD method based on the said OCB mode is required commonly to have the following characteristics:
(1) K₃/K₁ should be low in order to attain a driving property in a lower voltage range, a high contrast and a wide viewing angle,
(2) a dielectric anisotropy (Δε) should be high in order to drive in a lower voltage range,
(3) a refractive anisotropy (Δn) should be high in order to attain a wide viewing angle,
(4) a voltage holding ratio (V. H. R.) should be high in order to maintain a high contrast, and
(5) it should be chemically stable.

The OCB mode is quite different from the conventional TN (twist nematic) and STN (supertwist nematic) modes and it uses a cell having a twist angle of 0° between upper and lower substrates, a biaxial phase different plate, and a nematic liquid crystal composition without any chiral agent added. A characteristic of the said OCB mode on driving is to drive liquid crystal molecules in the cell at a bend-aligned state.

That is, by combining bend-aligned liquid crystals and a phase different plate, it can be realized to obtain a very wide viewing angle and a very high contrast compared to those of the conventional TN (twist nematic) and STN (supertwist nematic) modes.

Furthermore, by driving liquid crystals in their bend-aligned states, it can be also realized to obtain a very fast response time such as about 1/20 to 1/500 compared to that of the conventional TN (twist nematic) and STN (supertwist nematic) modes.

By driving an OCB mode with the above-mentioned characteristics and advantages as an active matrix LCD (AM-LCD) element, a liquid crystal display element can be proposed which has a distinctly wide viewing angle and a high-speed response compared to those of the active matrix LCD (AM-LCD) method using the conventional twist nematic (TN) cells.

As described above, a characteristic of the OCB mode on driving is to drive liquid crystal molecules in cells at their bend-aligned states. However, since they are splay-aligned without any voltage applied, they should be driven in a voltage range higher than a transition voltage (V_{CR}) at which a splay-aligned state being transited to a bend-aligned state. If dielectric anisotropies (Δε) of liquid crystal compositions are the same, magnitudes of transition voltage (V_{CR}) depend on respective absolute values of a bend elastic constant K₃ and a splay elastic constant K₁ as well as an elastic constant ratio K₃/K₁ of these two constants, wherein the smaller the absolute values of these two elastic constants K₃ and K₁ as well as the smaller the ratio K₃/K₁, the smaller the transition voltage (V_{CR}).

Therefore, for driving in a lower voltage range by the OCB mode, it is necessary to decrease absolute values of these two elastic constants K₃ and K₁ as well as K₃/K₁ as possible, in order to decrease the said transition voltage (V_{CR}).

Furthermore, if refractive anisotropies (Δn) and dielectric anisotropies (Δε) are the same and a cell thickness is constant, the smaller the elastic constant ratio K₃/K₁, the higher the retardation of liquid crystals which are bend-aligned near the transition voltage. As the result, a contrast can be thus increased. Furthermore, a wider viewing angle can be obtained since a driving voltage range can be shifted to a lower voltage range due to the obtained high contrast.

From the above-mentioned matters, in order to obtain a driving property in a lower voltage range, a high contrast and a wide viewing angle, K₃/K₁ of a liquid crystal composition is required to be low.

And, for driving in a lower voltage range, a dielectric anisotropy (Δε) is required to be high in addition to the above-mentioned requirements for absolute values of elastic constants K₃ and K₁ as well as their ratio K₃/K₁ of a liquid crystal composition.

Furthermore, in the OCB mode, the thinner the thickness of cells, the wider the viewing angle. Thus, in order to make the thickness of cells thin without changing retardation, a refractive anisotropy (Δn) of a liquid crystal composition is required to be high.

Furthermore, as one advantage of the OCB mode, there is mentioned a response speed of ten times faster than that of TN cell. However, since a change in a transmittance due to a change of a voltage with the lapse of time becomes more dependent on the said faster response speed, a voltage holding ratio (V. H. R.) is required to be high in order to maintain a high contrast.

Of the physical properties required for the liquid crystal composition in the OCB mode described above, a liquid crystal composision to satisfy such characteristics that K₃/K₁ being low, a dielectric anisotropy (Δε) being high and a refractive anisotropy (Δn) being high generally tends to contain impure ions in liquid crystals. As the result, it becomes difficult to raise a voltage holding ratio (V. H. R.). However, as described above, it is required in the OCB mode that the voltage holding ratio (V. H. R.) is high to maintain a high contrast. That is, it is presently difficult to coexist such characteristics that a K₃/K₁ being low, a dielectric anisotropy (Δε) being high and a refractive anisotropy (Δn) being high as well as that a voltage holding ratio being raised.

### Disclosure of the Invention

We inventors found that a liquid crystal composition satisfying these characteristics can be prepared by means of the below-mentioned first component, second component and third component and invented a liquid crystal display element based on an OCB mode. As clear from the above-mentioned description, an object of the present invention is to propose a liquid crystal display element using a liquid crystal composition satisfying various characteristics required for an AM-LCD display based on the below-mentioned OCB mode.

### Best Mode for carrying out the Invention

The first inventive matter of the present invention relates to an active driving OCB (Optically Compensated Bend) liquid crystal display element, wherein
a) a sealed cell formed of two substrates having transparent electrodes is used,
b) a nematic liquid crystal mixture having a positive dielectric anisotropy and a high resistance is contained in the cell,
c) rubbing directions of aligned membranes coated on the two upper and lower substrates are made in the same direction (a twist angle of 0° ),
d) an arrangement is made such that one angle constituted by a pre-tilt direction of liquid crystals on the aligned membranes and the substrates being +θ and the other being -θ,
e) a biaxial phase different film is arranged on the top of the upper substrate of the upper and lower substrates in the cell, and polarized plates are arranged above and below the cell containing the arranged biaxial phase different film, and
f) respective pixels in the sealed cell are switched, characterized in that the said nematic liquid crystal composition contains at least one compound having (a) terminal group structure(s) of the following general formula (I) 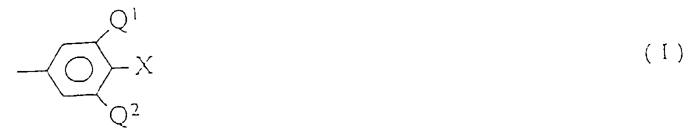 (wherein, X denotes F, Cl, CF₃, OCF₃, CF₂H, OCF₂H, OCF₂CF₂H, OCF₂Cl or OCF₂CFHCF₃, Q¹ and Q² denote independently each other H or F.) as the first component.

By using the compound having the polar terminal group structure(s) of the general formula (I), a dielectric anisotropy. (Δε) of a liquid crystal composition can be increased. Thus, a transition voltage (V_{CR}) at which a splay-alignment being transited to a bend-alignment can be decreased, so that an active driving OCB element with a lower voltage driving property can be realized as the result. Furthermore, since the terminal group of the general formula (I) is a polar group such as fluorine or chlorine type one, a high specific resistant value can be realized irrelevant to having a high dielectric anisotropy (Δε), and also thermal stability and chemical stability are superior. Therefore, a voltage holding ratio (V. H. R.) of the liquid crystal composition using the said compound is high. That is, an active driving OCB element maintaining a high contrast can be realized.

Furthermore, in the case that the polar groups X are the same a compound with lateral F's (in Q¹ and Q²) has low absolute values of elastic constants K₃ and K₁ as well as a high dielectric anisotropy (Δε) compared to the case without F. Thus, by using a compound with lateral F's in the general formula (I), it is possible to prepare a liquid crystal composition having low absolute values of elastic constants K₃ and K₁ as well as a high dielectric anisotropy (Δε).

As the result, it is possible to realize an active driving OCB element for driving in a lower voltage. Furthermore, it is possible to realize a high voltage holding ratio (V. H. R.) for the compound of the formula (I) having F's laterally, since it has a high specific resistant value in spite of having a high dielectric anisotropy (Δε) as mentioned above.

The second inventive matter of the present invention relates to a liquid crystal display element described in the explanation of the above-mentioned first inventive matter, characterized in that the compound of the general formula (I) is one expressed by the general formulae (I-a), (I-b) and (I-c) 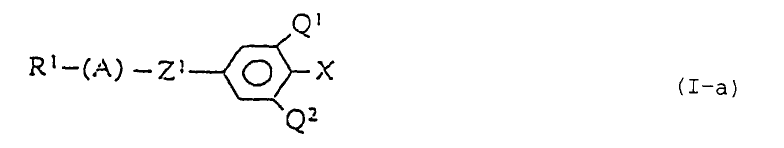 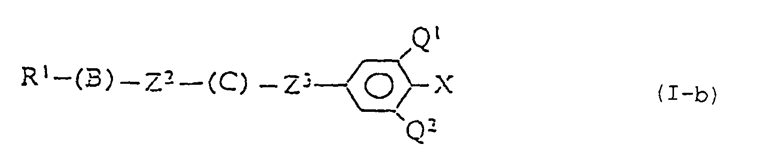 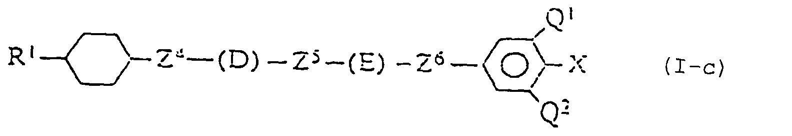 (wherein, R¹ denotes an alkyl group or a fluoroalkyl group with from 1 to 10 carbon atoms, of which optional one or non-adjacent two or more than two methylene (-CH₂) group(s) may be optionally substituted by (an) oxygen atom(s) or -CH=CH-; X denotes F, Cl, CF₃, OCF₃, CF₂H, OCF₂H, OCF₂CF₂H, OCF₂Cl or OCF₂CFHCF₃; Q¹ and Q² denote independently each other H or F; Z¹, Z², Z³, Z⁴, Z⁵ and Z⁶ denote independently each other -CH₂CH₂-, -(CH₂)₄-, -COO-, -CF₂O-, -CH=CH- or a single bond; A, B, C, D and E denote independently each other trans-1,4-cyclohexylene, pyrimidine-2,5-diyl, 1,4-cyclohexenylene or 1,4-phenylene optionally substituted with F at a branching H.).

By combining these compounds of the general formulae (I-a), (I-b) and (I-c), a dielectric anisotropy (Δε) and a transparent point (NI point) of the liquid crystal composition may be optionally adjusted. Particularly, the compounds in which bondings of Z¹, Z², Z³, Z⁴, Z⁵ and Z⁶ are -COO- or -CF₂O- have higher dielectric anisotropies (Δε) than the compounds with -CH₂CH₂-, -CH=CH- or a single bond, and additionally, in the case of those having -COO-bonding, absolute values of elastic constants K₃ and K₁ are low. As the result, it is thus possible to realize an active driving OCB element wigh a driving property at a very low voltage.

Furthermore, of the compounds having -COO or -CF₂O- as Z¹, Z², Z³, Z⁴, Z⁵ and Z⁶, those having F's laterally have high dielectric anisotropies (Δε) and even smaller absolute values of elastic constants K₃ and K₁, so that an active driving OCB element with a driving property at a lower voltage can be realized.

Furthermore, since the compounds shown by the general formulae (I-a), (I-b) and (I-c) have polar groups such as fluorine type or chlorine type ones, liquid crystal compositions using the compounds show high specific resistant values and also they are superior in thermal stability and chemical stability. Thus, it is possible to raise a voltage holding ratio (V. H. R.) of the liquid crystal composition. That is, an active driving OCB element maintaining a high contrast can be realized.

Furthermore, of the general formulae (I-a), (I-b) and (I-c), compounds with pyrimidine-2,5-diyl have a very low elastic constant ratio K₃/K₁ such as less than 1.3 and a high refractive anisotropy (Δn) such asΔn ≦ 0.2. Thus, it is possible to adjust an elastic constant ratio K₃/K₁ of the liquid crystal composition low and a refractive anisotropy (Δn) thereof particularly high, an active driving OCB element having a lower voltage driving property, a high contrast and a wide viewing angle can be realized by using these compounds with pyrimidine-2,5-diyl.

The third inventive matter of the present invention relates to a liquid crystal display element according to the above-mentioned first or second inventive matter, characterized in that an amount of the first component used is from 50 to 100% by weight based on the total weight of the liquid crystal composition.

The fourth inventive matter of the present invention relates to a liquid crystal display element according to any of the above-mentioned first to third inventive matters, characterized in that at least one compound selected from the group of compound shown by the general formulae (II), (III) and (IV) is contained as the second component:

R²-(G)-Z⁷-(J)-R³ (II)

(wherein, R² and R³ denote independently each other an alkyl group or a fluoroalkyl group with from 1 to 10 carbon atoms, in which optional one or non-adjacent two or more than two methylene (-CH₂-) group(s) may be substituted by (an) oxygen (-O-) atom(s) or -CH=CH-; G and J denote independently each other trans-1,4-cyclohexylene, 1,4-phenylene or pyrimidine-2,5-diyl; and Z⁷ denotes -CH₂CH₂-, -COO-, -CH=CH-, -C≡C- or a single bond.),

R⁴-(K)-Z⁸-(L)-Z⁹-(M)-R⁵ (III)

(wherein, R⁴ and R⁵ denote independently each other an alkyl group or a fluoroalkyl group with from 1 to 10 carbon atoms, in which optional one or non-adjacent two or more than two methylene (-CH₂-) group(s) may be substituted by (an) oxygen (-O-) atom(s) or -CH=CH-; K denotes trans-1,4-cyclohexylene, 1,4-phenylene or pyrimidine-2,5-diyl; L and M denote independently each other trans-1,4-cyclohexylene or 1,4-phenylene optionally substituted by F at one branching H; Z⁸ and Z⁹ denote independently each other -CH₂CH₂-, -CH=CH-, -C≡C-, -COO- or a single bond.), and 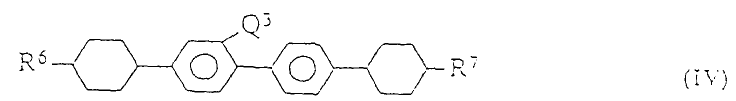 (wherein, R⁶ and R⁷ denote independently each other an alkyl group or a fluoroalkyl group with from 1 to 10 carbon atoms, in which optional one or non-adjacent two or more than two methylene (-CH₂-) group(s) may be substituted by (an) oxygen (-O-) atom(s) or -CH=CH-, and Q³ denotes H or F.).

Since these compounds for the second component shown by the general formulae (II), (III) and (IV) have not any high polar substituent, any impure ion cannot be present stably in these compounds. Thus, these compounds for the second component have very high specific resistant values and also they are very superior in thermal stability and chemical stability. Therefore, by combining the second component with the first component, it is possible to prepare a liquid crystal composition which has a high dielectric anisotropy (≦ ε), low absolute values of elastic constants K₃ and K₁, a low elastic constant ratio K₃/K₁ as well as a very high voltage holding ratio (V. H. R.) and which are superior in thermal stability and chemical stability. Thus, an active driving OCB element having a low voltage driving property, a high contrast and a wide viewing angle and also maintaining a high reliability can be realized.

Furthermore, of the general formulae (II), (III) and (IV), compounds containing 4-4' -biphenylene as a backbone, compounds containing a 1,4-phenylene backbone bonded with pyrimidine-2,5-diyl, compounds containing a backbone with -CH=CH-between two benzene rings in 4-4' -biphenylene, and compounds containing two or more than two above-mentioned backbones (wherein, optional H in 1,4-phenylene contained in backbones of these compounds may be substituted by F) have a high refractive anisotropy (Δn) such as Δn ≦0.2. Thus, since the refractive anisotropy (Δn) of the liquid crystal composition can be raised by using these compounds containing the said backbones, an active driving OCB element having a high contrast and a wide viewing angle can be realized.

Furthermore, of the general formulae (II), (III) and (IV), compounds containing pyrimidine-2,5-diyl in their backbones have low absolute values of elastic constants K₃ and K₁ as well as a very low elastic constant ratio K₃/K₁ such as <1.3. Thus, since absolute values of K₃ and K₁ as well as an elastic constant ratio K₃/K₁ of a liquid crystal composition can be decreased by using compounds containing pyrimidine-2,5-diyl in backbones, an active driving OCB element having a lower voltage driving property, a high contrast and a wide viewing angle can be realized.

Furthermore, since compounds shown by the general formulae (III) and (IV) have a high transparent point (NI point) such as NI≧100 and a high refractive anisotropy (Δn) such asΔn ≧0.1, it is possible to prepare a liquid crystal composition which has a low dielectric anisotropy (Δε), a low absolute value of elastic constant ratio K3/K1, a high refractive anisotropy (Δn), a high transparent point (NI point) and a very high voltage holding ratio (V. H. R.) and also which is superior in thermal stability and chemical stability, by combining the said compounds with the first component. Thus, an active driving OCB element can be realized which has a lower voltage driving property, a high contrast, a wide viewing angle, a high reliability and a wide driving temperature range.

The fifth inventive matter of the present invention relates to a liquid crystal display element according to the above-mentioned fourth inventive matter, characterized in that the amount of the second component used is 40% or less than 40% by weight based on the total weight of the liquid crystal composition.

The sixth inventive matter of the present invention relates to a liquid crystal display element according to the above-mentioned fourth or fifth inventive matter, characterized in that one or more than one compound(s) selected from the group of compounds shown by the general formulae (VI-a), (VI-b), (VI-c), (VI-d) and (VI-e) is(are) contained as the third component: 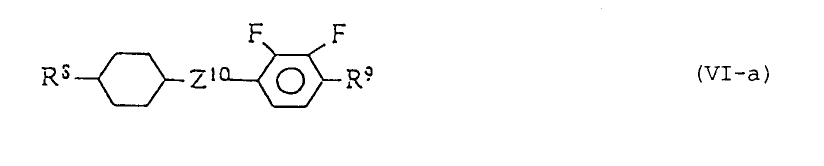 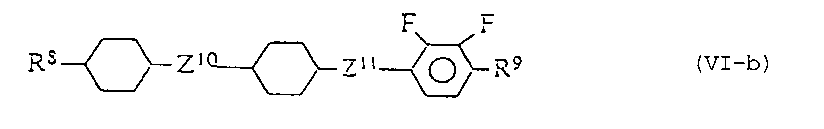 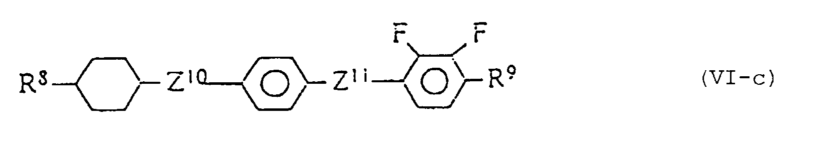 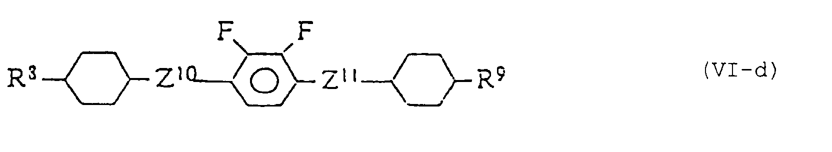 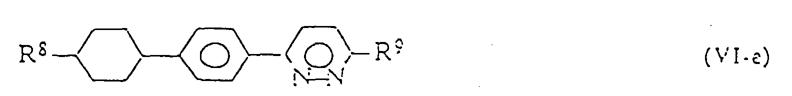 (wherein, R⁸ denotes an alkyl group or a fluoroalkyl group with from 1 to 10 carbon atoms, in which optional one or non-adjacent two or more than two methylene (-CH₂-) group(s) may be substituted by (an) oxygen (-O-) atom(s) or -CH=CH-, R⁹ denotes an alkyl group or a fluoroalkyl group with from 1 to 10 carbon atoms, in which optional one or non-adjacent two or more than two methylene (-CH₂-) group(s) may be substituted by (an) oxygen (-O-) atom or -CH=CH-, CF₃ or CF₂H; Z¹⁰ and Z¹¹ denote independently each other -CH₂CH₂-, -COO- or a single bond.).

The seventh inventive matter of the present invention relates to a liquid crystal display element according to the above-mentioned sixth inventive matter, characterized in that an amount of the third component used is 20% or less than 20% based on the total weight of the liquid crystal composition.

The eighth inventive matter of the present invention relates to a liquid crystal display element according to any of the above-mentioned first to seventh inventive matters,
characterized in that a nematic phase range in the liquid crystal composition is 60°C or above 60°C, an optical anisotropy Δn is 0.1 or more than 0.1, an elastic constant ratio K₃/K₁ of a splay mode and a bend mode is 1.7 or less than 1.7, and a dielectric anisotropy Δε is 5.0 or more than 5.0.

The ninth, tenth and eleventh inventive matters of the present invention relate to liquid crysal compositions in which the liquid crystal compositions have the compositions defined in any of the above-mentioned first to fourth or sixth inventive matters.

An amount of the first component of the liquid crystal composition used for an active driving OCB element according to the invention is preferably from 50 to 100% by weight based on the total weight of the liquid crystal composition. If it is 50% or less than 50% by weight, a transition voltage (V_{CR}) at which a splay-alignment being transited to a bend-alignment becomes higher, which is not preferable in practice.

An amount of the second component used is preferably 40% or less than 40% by weight based on the total weight of the liquid crystal composition. If it is above 40% by weight, a transition voltage (V_{CR}) at which a splay-alignment being transited to a bend-alignment becomes higher, which is not preferable in practice. It is more preferably 30% or less than 30% by weight.

The liquid crystal composition used in the invention can contain other compounds in such a propriate amount not to effect the purpose of the invention, for the aims to adjust a threshold voltage, a nematic range, Δn, a dielectric anisotropy and a viscosity etc., according to the purpose of the active driving OCB elements used.

The liquid crystal composition used according to the invention is prepared by the conventional methods known by themselves. In general, there is used a method to dissolve various components mutually at a raised temperature.

### Examples

The present invention will be illustrated by the following Examples, which don't limit the invention. Composition ratios in Comparative Examples and Examples are all shown by weight %. There are described determined values of voltage holding ratios, determination of which being carried out based on an area method. Furthermore, expression ways of respective compounds are according to those in Table 1.

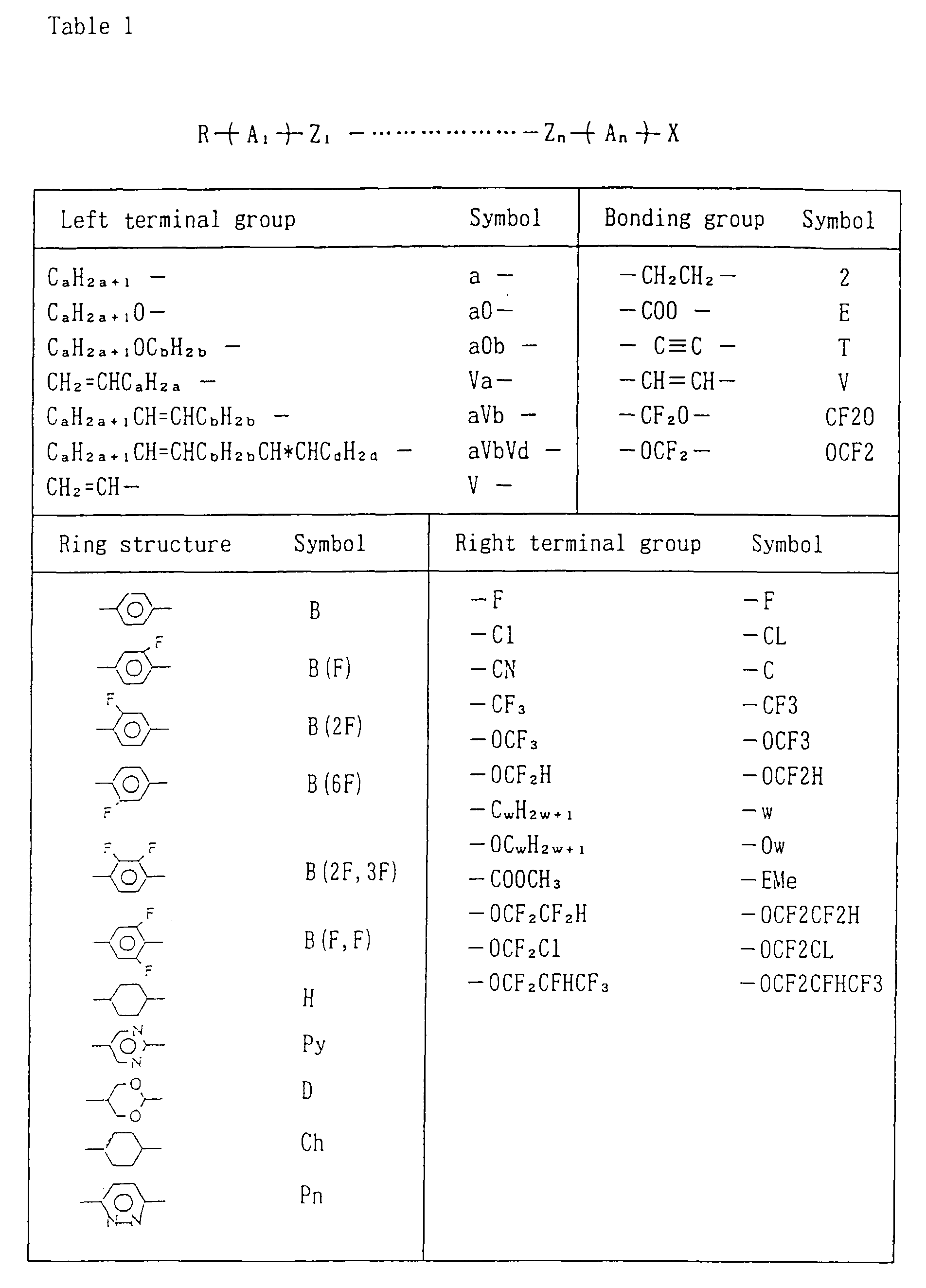

### Example 1

Concerning a liquid crystal composition consisted of

| | |
|---|---|
| 3-HB-CL | 7.0% |
| 2-HHB-CL | 5.0% |
| 4-HHB-CL | 10.0% |
| 5-HHB-CL | 4.0% |
| 2-HHB(F)-F | 4.0% |
| 3-HHB(F)-F | 4.0% |
| 5-HHB(F)-F | 4.0% |
| 2-HBB(F)-F | 10.0% |
| 3-HBB(F)-F | 10.0% |
| 5-HBB(F)-F | 10.0% |
| 3-HBB(F,F)-F | 16.0% |
| 5-HBB(F,F)-F | 16.0%, |

a transparent point was T_{NI}=90.4 (°C), a viscosity at 20°C was η₂₀=24.2 (mPa^{.}s), a refractive anisotropy at 25°C was Δn=0.119, a dielectric anisotropy at 20°C was Δε=6.8, an elastic constant K₃ at 25 °C was 14.8(PN), K₁ was 8.98(PN) and an elastic constant ratio K₃/K₁ was 1.65. The liquid crystal composition was sealed in a cell for OCB having a thickness of 6.0 µm, and a transition voltage (V_{CR}) at which a splay-alignment being transited to a bend-alignment was determined, to obtain V_{CR}=2.21(V). Also, a voltage holding ratio of the liquid crystal composition was determined, to obtain a voltage holding ratio at 25 °C of 99.3%.

### Example 2

Concerning a liquid crystal composition consisted of

| | |
|---|---|
| 3-PyB(F)-F | 12.0% |
| 7-HB(F)-F | 11.0% |
| 2-HHB(F)-F | 9.0% |
| 3-HHB(F)-F | 8.0% |
| 5-HHB(F)-F | 8.0% |
| 2-HBB(F)-F | 8.0% |
| 3-HBB(F)-F | 8.0% |
| 5-HBB(F)-F | 7.0% |
| 3-HHEB-F | 5.0% |
| 5-HHEB-F | 5.0% |
| 3-HBEB-F | 6.0% |
| 3-PyBB-F | 7.0% |
| 4-PyBB-F | 6.0%, |

a transparent point was T_{NI}=80.7 (°C), a viscosity at 20°C was η₂₀=26.9(mPa·s), a refractive anisotropy at 25°C was Δn=0.122, a dielectric anisotropy at 20°C was Δε =8.6, an elastic constant K₃ at 25 °C was 11.8(PN), K₁ was 9.84(PN) and an elastic constant ratio K₃/K₁ was 1.20. The liquid crystal composition was sealed in a cell for OCB having a thickness of 6.0 µm, and a transition voltage (V_{CR}) at which a splay-alignment being transited to a bend-alignment was determined, to obtain V_{CR}=1.82(V). Also, a voltage holding ratio of the liquid crystal composition was determined, to obtain a voltage holding ratio at 25 °C of 98.5%.

### Example 3

Concerning a liquid crystal composition consisted of

| | |
|---|---|
| 3-H2BB(F,F)-F | 10.0% |
| 5-H2BB(F,F)-F | 10.0% |
| 3-HH2B(F,F)-F | 6.0% |
| 3-HBB(F,F)-F | 29.0% |
| 5-HBB(F,F)-F | 29.0% |
| 3-HBEB(F,F)-F | 3.0% |
| 5-HBEB(F,F)-F | 3.0% |
| 3-HHEB(F,F)-F | 10.0%, |

a transparent point was T_{NI}=61.5 (°C), a viscosity at 20°C was η₂₀=34.0(mPa·s), a refractive anisotropy at 25°C was Δn=0.114, a dielectric anisotropy at 20°C was Δε=10.3, an elastic constant ratio K₃/K₁ at 25°C was 1.62. The liquid crystal composition was sealed in a cell for OCB having a thickness of 6.0 µm, and a transition voltage (V_{CR}) at which a splay-alignment being transited to a bend-alignment was determined, to obtain V_{CR}=1.55(V). Also, a voltage holding ratio of the liquid crystal composition was determined, to obtain a voltage holding ratio at 25 °C of 98.9%.

### Example 4

Concerning a liquid crystal composition consisted of

| | |
|---|---|
| 3-H2HB(F,F)-F | 5.0% |
| 5-H2HB(F,F)-F | 5.0% |
| 3-HH2B(F,F)-F | 6.0% |
| 4-H2BB(F,F)-F | 10.0% |
| 3-HBB(F,F)-F | 29.0% |
| 5-HBB(F,F)-F | 29.0% |
| 3-HBEB(F,F)-F | 3.0% |
| 5-HBEB(F,F)-F | 3.0% |
| 3-HHEB(F,F)-F | 10.0%, |

a transparent point was T_{NI}=63.2 (°C), a viscosity at 20°C was η₂₀=34.3(mPa·s), a refractive anisotropy at 25 °C was Δn=0.108, a dielectric anisotropy at 20°C was Δε=10.0, an elastic constant ratio K₃/K₁ at 25°C was 1.65. The liquid crystal composition was sealed in a cell for OCB having a thickness of 6.0 µm, and a transition voltage (V_{CR}) at which a splay-alignment being transited to a bend-alignment was determined, to obtain V_{CR}=1.63(V). Also, a voltage holding ratio of the liquid crystal composition was determined, to obtain a voltage holding ratio at 25 °C of 98.6%.

### Example 5

Concerning a liquid crystal composition consisted of

| | |
|---|---|
| 3-H2HB(F,F)-F | 5.0% |
| 5-H2HB(F,F)-F | 5.0% |
| 3-HH2B(F,F)-F | 9.0% |
| 5-HH2B(F,F)-F | 9.0% |
| 3-HBB(F,F)-F | 26.0% |
| 5-HBB(F,F)-F | 26.0% |
| 3-HHEB(F,F)-F | 10.0% |
| 3-HBEB(F,F)-F | 2.0% |
| 5-HBEB(F,F)-F | 2.0% |
| 3-HHBB(F,F)-F | 4.0% |
| 3-HH2BB(F,F)-F | 2.0%, |

a transparent point was T_{NI}=83.8 (°C), a viscosity at 20°C was η₂₀=31.9(mPa·s), a refractive anisotropy at 25°C was Δn=0.110, a dielectric anisotropy at 20°C was Δε=10.5, an elastic constant ratio K₃/K₁ at 25°C was 1.69. The liquid crystal composition was sealed in a cell for OCB having a thickness of 6.0 µm, and a transition voltage (V_{CR}) at which a splay-alignment being transited to a bend-alignment was determined, to obtain V_{CR}=1.70(V). Also, a voltage holding ratio of the liquid crystal composition was determined, to obtain a voltage holding ratio at 25 °C of 99.0%.

### Example 6

Concerning a liquid crystal composition consisted of

| | |
|---|---|
| 3-HHB(F,F)-F | 8.0% |
| 3-HH2B(F,F)-F | 10.0% |
| 5-HH2B(F,F)-F | 10.0% |
| 3-HBB(F,F)-F | 26.0% |
| 5-HBB(F,F)-F | 26.0% |
| 3-HHEB(F,F)-F | 10.0% |
| 3-HBEB(F,F)-F | 2.0% |
| 5-HBEB(F,F)-F | 2.0% |
| 3-HHBB(F,F)-F | 6.0%, |

a transparent point was T_{NI}=82.2 (°C), a viscosity at 20°C was η₂₀=32.3 (mPa^{.}s), a refractive anisotropy at 25°C was Δn=0.110, a dielectric anisotropy at 20°C was Δε=10.6. The liquid crystal composition was sealed in a cell for OCB having a thickness of 6.0 µm, and a transition voltage (V_{CR}) at which a splay-alignment being transited to a bend-alignment was determined, to obtain V_{CR}=1.69(V). Also, a voltage holding ratio of the liquid crystal composition was determined, to obtain a voltage holding ratio at 25 °C of 99.2%.

### Example 7

Concerning a liquid crystal composition consisted of

| | |
|---|---|
| 2-HHEBB(F,F)-F | 7.0% |
| 5-HHEBB(F,F)-F | 3.0% |
| 5-HB-F | 3.0% |
| 7-HB-F | 4.0% |
| 2-HHB-OCF₃ | 12.0% |
| 3-HHB-OCF₃ | 12.0% |
| 5-HHB-OCF₃ | 10.0% |
| 2-H2HB-OCF₃ | 6.0% |
| 3-H2HB-OCF₃ | 6.0% |
| 4-H2BB(F)-F | 15.0% |
| 5-H2BB(F)-F | 14.0% |
| 3-HBB(F,F)-OCF₂CFHCF₃ | 4.0% |
| 3-H2BB(F,F)-OCF₂CFHCF₃ | 2.0% |
| 3-HBB-OCF₂CFHCF₃ | 2.0%, |

a transparent point was T_{NI}=110.5(°C), a viscosity at 20°C was η₂₀=22.5 (mPa^{.}s), a refractive anisotropy at 25°C was Δn=0.106, a dielectric anisotropy at 20°C was Δε=5.4. The liquid crystal composition was sealed in a cell for OCB having a thickness of 6.0 µm, and a transition voltage (V_{CR}) at which a splay-alignment being transited to a bend-alignment was determined, to obtain V_{CR}=2.65(V). Also, a voltage holding ratio of the liquid crystal composition was determined, to obtain a voltage holding ratio at 25 °C of 98.5%.

### Example 8

Concerning a liquid crystal composition consisted of

| | |
|---|---|
| 5-H4HB-OCF₃ | 7.0% |
| 4-H2BB(F)-F | 8.0% |
| 5-H2BB(F)-F | 7.0% |
| 3-HBB-OCF₂CFHCF₃ | 7.0% |
| 3-HBB(F,F)-OCF₂CFHCF₃ | 7.0% |
| 5-BB-OCF₂H | 4.0% |
| 3-HEB-OCF₃ | 3.0% |
| 5-HHEB-OCF₃ | 7.0% |
| 2-HHB(F)-F | 5.0% |
| 3-HHB(F)-F | 5.0% |
| 5-HHB(F)-F | 4.0% |
| 3-HHEB(F,F)-F | 7.0% |
| 5-H2B(F)-F | 10.0% |
| 7-HB(F,F)-F | 9.0% |
| 3-HBEB-F | 10.0%, |

a transparent point was T_{NI}=72.7 (°C), a viscosity at 20°C was η₂₀=22.3(mPa·s), a refractive anisotropy at 25°C was Δn=0.101, a dielectric anisotropy at 20°C was Δε=5.5. The liquid crystal composition was sealed in a cell for OCB having a thickness of 6.0 µm, and a transition voltage (V_{CR}) at which a splay-alignment being transited to a bend-alignment was determined, to obtain V_{CR}=2.12(V). Also, a voltage holding ratio of the liquid crystal composition was determined, to obtain a voltage holding ratio at 25 °C of 98.2%.

### Example 9

Concerning a liquid crystal composition consisted of

| | |
|---|---|
| 5-H4HB-OCF₃ | 8.0% |
| 4-H2BB(F)-F | 9.0% |
| 5-H2BB(F)-F | 8.0% |
| 3-HBB(F,F)-OCF₂CFHCF₃ | 8.0% |
| 3-HBB(F)-OCF₂CF₂H | 8.0% |
| 3-HHB-OCF₃ | 8.0% |
| 3-HHB(F,F)-F | 8.0% |
| 3-HBB(F,F)-F | 12.0% |
| 5-HB-CL | 8.0% |
| 5-HHB-CL | 4.0% |
| 3-HB-CL | 9.0% |
| 5-H2B(F)-F | 10.0%, |

a transparent point was T_{NI}=62.2 (°C), a viscosity at 20°C was η₂₀=18.2(mPa·s), a refractive anisotropy at 25°C was Δn=0.100, a dielectric anisotropy at 20°C was Δε=5.2. The liquid crystal composition was sealed in a cell for OCB having a thickness of 6.0 µm, and a transition voltage (V_{CR}) at which a splay-alignment being transited to a bend-alignment was determined, to obtain V_{CR}=2.14(V). Also, a voltage holding ratio of the liquid crystal composition was determined, to obtain a voltage holding ratio at 25 °C of 98.4%.

### Example 10

Concerning a liquid crystal composition consisted of

| | |
|---|---|
| 5-H4HB-OCF₃ | 8.0% |
| 4-H2BB(F)-F | 9.0% |
| 5-H2BB(F)-F | 8.0% |
| 3-HH2B-OCF₃ | 4.0% |
| 3-H2HB-OCF₃ | 4.0% |
| 3-HBB(F,F)-OCF₂CFHCF₃ | 8.0% |
| 3-HBB(2F)-OCF₂CFHCF₃ | 4.0% |
| 3-HBB(F,F)-F | 12.0% |
| 5-HHEB-OCF₃ | 3.0% |
| 3-HHEB(F,F)-F | 8.0% |
| 5-HB-CL | 7.0% |
| 5-HHB-CL | 5.0% |
| 5-H2B(F)-F | 10.0% |
| 2-HEB-F | 10.0%, |

a transparent point was T_{NI}=60.6 (°C), a viscosity at 20°C was η₂₀=20.0(mPa·s), a refractive anisotropy at 25°C was Δn=0.105, a dielectric anisotropy at 20°C was Δε=5.6. The liquid crystal composition was sealed in a cell for OCB having a thickness of 6.0 µm, and a transition voltage (V_{CR}) at which a splay-alignment being transited to a bend-alignment was determined, to obtain V_{CR}=1.97(V). Also, a voltage holding ratio of the liquid crystal composition was determined, to obtain a voltage holding ratio at 25 °C of 98.3%.

### Example 11

Concerning a liquid crystal composition consisted of

| | |
|---|---|
| 3-PyB(F)-F | 12.0% |
| 7-HB(F)-F | 11.0% |
| 2-HHB(F)-F | 7.0% |
| 3-HHB(F)-F | 7.0% |
| 5-HHB(F)-F | 7.0% |
| V-HHB(F)-F | 2.0% |
| V2-HHB(F)-F | 2.0% |
| 2-HBB(F)-F | 8.0% |
| 3-HBB(F)-F | 8.0% |
| 5-HBB(F)-F | 7.0% |
| 3-HHEB-F | 5.0% |
| 5-HHEB-F | 5.0% |
| 3-HBEB-F | 6.0% |
| 3-PyBB-F | 7.0% |
| 4-PyBB-F | 6.0%, |

a transparent point was T_{NI}=81.0 (°C), a viscosity at 20°C was η₂₀=26.8(mPa·s), a refractive anisotropy at 25°C was Δn=0.128, a dielectric anisotropy at 20°C was Δε=8.7, an elastic constant K₃ at 25 °C was 12.2(PN), K₁ was 9.88(PN) and an elastic constant ratio K₃/K₁ was 1.23. The liquid crystal composition was sealed in a cell for OCB having a thickness of 6.0 µm, and a transition voltage (V_{CR}) at which a splay-alignment being transited to a bend-alignment was determined, to obtain V_{CR}=1.87(V). Also, a voltage holding ratio of the liquid crystal composition was determined, to obtain a voltage holding ratio at 25°C of 98.1%.

### Example 12

Concerning a liquid crystal composition consisted of

| | |
|---|---|
| V-HHB(F,F)-F | 3.0% |
| 3-HHB(F,F)-F | 5.0% |
| 3-HH2B(F,F)-F | 10.0% |
| 5-HH2B(F,F)-F | 10.0% |
| 3-HBB(F,F)-F | 26.0% |
| 5-HBB(F,F)-F | 26.0% |
| 3-HHEB(F,F)-F | 10.0% |
| 3-HBEB(F,F)-F | 2.0% |
| 5-HBEB(F,F)-F | 2.0% |
| 3-HHBB(F,F)-F | 6.0%, |

a transparent point was T_{NI}=82.5 (°C), a viscosity at 20°C was η₂₀=32.0(mPa·s), a refractive anisotropy at 25°C was Δn=0.113, a dielectric anisotropy at 20°C was Δε=10.6. The liquid crystal composition was sealed in a cell for OCB having a thickness of 6.0µm, and a transition voltage (V_{CR}) at which a splay-alignment being transited to a bend-alignment was determined, to obtain V_{CR}=1.72(V). Also, a voltage holding ratio of the liquid crystal composition was determined, to obtain a voltage holding ratio at 25°C of 98.7%.

### Example 13

Concerning a liquid crystal composition consisted of

| | |
|---|---|
| 7-HB(F,F)-F | 3.0% |
| 2-HHB(F)-F | 2.0% |
| 3-HHB(F)-F | 3.0% |
| 5-HHB(F)-F | 3.0% |
| 2-HBB(F)-F | 9.0% |
| 3-HBB(F)-F | 9.0% |
| 5-HBB(F)-F | 8.0% |
| 3-HBB-F | 4.0% |
| 5-HBB-F | 3.0% |
| 3-HBB(F,F)-F | 15.0% |
| 5-HBB(F,F)-F | 15.0% |
| 3-HB-O2 | 7.0% |
| 3-HH-4 | 4.0% |
| 3-HB(F)TB-2 | 5.0% |
| 3-HB(F)TB-3 | 5.0% |
| 3-HB(F)TB-4 | 5.0%, |

a transparent point was T_{NI}=92.1 (°C), a viscosity at 20°C was η₂₀=27.6(mPa·s), a refractive anisotropy at 25°C was Δn=0.140, a dielectric anisotropy at 20°C was Δε=5.5, an elastic constant K₃ at 25°C was 12.9(PN), K₁ was 10.9(PN) and an elastic constant ratio K₃/K₁ was 1.18. The liquid crystal composition was sealed in a cell for OCB having a thickness of 6.0 µm, and a transition voltage (V_{CR}) at which a splay-alignment being transited to a bend-alignment was determined, to obtain V_{CR}=2.30(V). Also, a voltage holding ratio of the liquid crystal composition was determined, to obtain a voltage holding ratio at 25°C of 99.0%.

### Example 14

Concerning a liquid crystal composition consisted of

| | |
|---|---|
| 3-PyB(F)-F | 16.0% |
| 7-HB(F)-F | 12.0% |
| 2-HHB(F)-F | 12.0% |
| 3-HHB(F)-F | 12.0% |
| 5-HHB(F)-F | 12.0% |
| 3-PyBB-F | 8.0% |
| 4-PyBB-F | 8.0% |
| 5-PyBB-F | 8.0% |
| 2-PyB-2 | 2.0% |
| 2-PyBH-3 | 3.0% |
| 3-PyBH-3 | 3.0% |
| 4-PyBH-3 | 4.0%, |

a transparent point was T_{NI}=83.8 (°C), a viscosity at 20°C was η₂₀=50.9(mPa·s), a refractive anisotropy at 25°C was was Δn=0.140, a dielectric anisotropy at 20°C was Δε=9.0, an elastic constant K₃ at 25°C was 15.3(PN), K₁ was 16.6(PN) and an elastic constant ratio K₃/K₁ was 0.92. The liquid crystal composition was sealed in a cell for OCB having a thickness of 6.0 µm, and a transition voltage (V_{CR}) at which a splay-alignment being transited to a bend-alignment was determined, to obtain V_{CR}=2.15(V). Also, a voltage holding ratio of the liquid crystal composition was determined, to obtain a voltage holding ratio at 25°C of 98.3%.

### Example 15

Concerning a liquid crystal composition consisted of

| | |
|---|---|
| 3-PyB(F)-F | 11.0% |
| 5-PyB(F)-F | 12.0% |
| 3-HHEB-F | 5.0% |
| 5-HHEB-F | 5.0% |
| 3-HBEB-F | 6.0% |
| 3-PyBB-F | 8.0% |
| 4-PyBB-F | 8.0% |
| 5-PyBB-F | 8.0% |
| 3-HB-02 | 20.0% |
| 3-HEB-04 | 1.4% |
| 4-HEB-02 | 1.0% |
| 5-HEB-01 | 1.0% |
| 3-HEB-02 | 0.9% |
| 5-HEB-02 | 0.7% |
| 2-PyBH-3 | 4.0% |
| 3-PyBH-3 | 4.0% |
| 4-PyBH-3 | 4.0%, |

a transparent point was T_{NI}=81.2 (°C), a viscosity at 20°C was η₂₀=27.8(mPa·s), a refractive anisotropy at 25°C was Δn=0.159, a dielectric anisotropy at 20°C was Δε=7.9, an elastic constant K₃ at 25°C was 14.0(PN), K₁ was 14.0(PN) and an elastic constant ratio K₃/K₁ was 1.00. The liquid crystal composition was sealed in a cell for OCB having a thickness of 6.0 µm, and a transition voltage (V_{CR}) at which a splay-alignment being transited to a bend-alignment was determined, to obtain V_{CR}=1.98(V). Also, a voltage holding ratio of the liquid crystal composition was determined, to obtain a voltage holding ratio at 25°C of 98.1%.

### Example 16

Concerning a liquid crystal composition consisted of

| | |
|---|---|
| 2-PyB-F | 2.0% |
| 3-PyB(F)-F | 10.0% |
| 5-PyB(F)-F | 11.0% |
| 3-HHEB-F | 5.0% |
| 5-HHEB-F | 5.0% |
| 3-HBEB-F | 6.0% |
| 3-PyBB-F | 8.0% |
| 4-PyBB-F | 8.0% |
| 5-PyBB-F | 6.0% |
| 3-PyB-01 | 2.0% |
| 3-HB-02 | 20.0% |
| 3-HEB-04 | 2.0% |
| 5-HEB-1 | 2.0% |
| 10-BEB-2 | 1.0% |
| 2-PyBH-3 | 4.0% |
| 3-PyBH-3 | 4.0% |
| 4-PyBH-3 | 2.0% |
| 3-PyBB-2 | 2.0%, |

a transparent point was T_{NI}=80.0 (°C), a viscosity at 20°C was η₂₀=28.7 (mPa·s), a refractive anisotropy at 25°C was Δn= 0.1700, a dielectric anisotropy at 20°C wasΔ ε=7.0, an elastic constant K₃ at 25°C was 13.8(PN), K₁ was 13.7(PN) and an elastic constant ratio K₃/K₁ was 1.01. The liquid crystal composition was sealed in a cell for OCB having a thickness of 6.0 µm, and a transition voltage (V_{CR}) at which a splay-alignment being transited to a bend-alignment was determined, to obtain V_{CR}=2.08(V). Also, a voltage holding ratio of the liquid crystal composition was determined, to obtain a voltage holding ratio at 25°C of 98.1%.

### Example 17

Concerning a liquid crystal composition consisted of

| | |
|---|---|
| 7-HB(F)-F | 8.0% |
| 7-HB(F,F)-F | 10.0% |
| 2-HBB(F)-F | 13.0% |
| 3-HBB(F)-F | 13.0% |
| 5-HBB(F)-F | 12.0% |
| 3-HB(F)TB-2 | 6.0% |
| 3-HB(F)TB-3 | 6.0% |
| 3-HB(F)TB-4 | 6.0% |
| 3-H2BTB-2 | 4.0% |
| 3-H2BTB-3 | 4.0% |
| 3-HBB(F,F)-F | 9.0% |
| 5-HBB(F,F)-F | 9.0%, |

a transparent point was T_{NI}=83.4 (°C), a viscosity at 20°C was η₂₀=30.8 (mPa^{.}s), a refractive anisotropy at 25°C was Δn=0.146, a dielectric anisotropy at 20°C was Δε=6.2, an elastic constant K₃ at 25°C was 10.9(PN), K₁ was 10.4(PN) and an elastic constant ratio K₃/K₁ was 1.05. The liquid crystal composition was sealed in a cell for OCB having a thickness of 6.0 µm, and a transition voltage (V_{CR}) at which a splay-alignment being transited to a bend-alignment was determined, to obtain V_{CR}=2.08(V). Also, a voltage holding ratio of the liquid crystal composition was determined, to obtain a voltage holding ratio at 25°C of 99.0%.

### Example 18

Concerning a liquid crystal composition consisted of

| | |
|---|---|
| 7-HB(F,F)-F | 7.0% |
| 2-BTB-01 | 11.0% |
| 3-HB-02 | 3.0% |
| 2-HBB(F)-F | 12.0% |
| 3-HBB(F)-F | 11.0% |
| 5-HBB(F)-F | 10.0% |
| 3-HBB(F,F)-F | 10.0% |
| 5-HBB(F,F)-F | 11.0% |
| 3-H2BTB-2 | 3.0% |
| 3-H2BTB-3 | 4.0% |
| 3-HB(F)TB-2 | 6.0% |
| 3-HB(F)TB-3 | 6.0% |
| 3-HB(F)TB-4 | 6.0%, |

a transparent point was T_{NI}=96.1 (°C), a viscosity at 20°C was η₂₀=35.9(mPa·s), a refractive anisotropy at 25°C wasΔn=0.179, a dielectric anisotropy at 20°C was Δε=5.5. The liquid crystal composition was sealed in a cell for OCB having a thickness of 6.0 µm, and a transition voltage (V_{CR}) at which a splay-alignment being transited to a bend-alignment was determined, to obtain V_{CR}=2.52(V). Also, a voltage holding ratio of the liquid crystal composition was determined, to obtain a voltage holding ratio at 25°C of 98.7%.

### Example 19

Concerning a liquid crystal composition consisted of

| | |
|---|---|
| 7-HB(F,F)-F | 3.0% |
| 2-HHB(F)-F | 2.0% |
| 3-HHB(F)-F | 3.0% |
| 5-HHB(F)-F | 3.0% |
| 2-HBB(F)-F | 9.0% |
| 3-HBB(F)-F | 9.0% |
| 5-HBB(F)-F | 8.0% |
| 3-HBB-F | 3.0% |
| 5-HBB-F | 3.0% |
| 3-HBB(F,F)-F | 15.0% |
| 5-HBB(F,F)-F | 15.0% |
| 3-HB-02 | 7.0% |
| 3-HH-4 | 4.0% |
| 3-HB(F)TB-2 | 5.0% |
| 3-HB(F)TB-3 | 5.0% |
| 3-HB(F)TB-4 | 4.0% |
| 2-BTB-1 | 1.0% |
| 3-HHB-F | 1.0%, |

a transparent point was T_{NI}=91.3 (°C), a viscosity at 20°C was η₂₀=27.0 (mPa·s), a refractive anisotropy at 25°C was Δn=0.146, a dielectric anisotropy at 20°C was Δε=5.3, an elastic constant K₃ at 25°C was 12.0(PN), K₁ was 10.1 (PN) and an elastic constant ratioK₃/K₁ was 1.19. The liquid crystal composition was sealed in a cell for OCB having a thickness of 6.0 µm, and a transition voltage (V_{CR}) at which a splay-alignment being transited to a bend-alignment was determined, to obtain V_{CR}=2.27(V). Also, a voltage holding ratio of the liquid crystal composition was determined, to obtain a voltage holding ratio at 25°C of 98.8%.

### Example 20

Concerning a liquid crystal composition consisted of

| | |
|---|---|
| 2-HHEBB(F,F)-F | 5.0% |
| 3-HB-CL | 5.0% |
| 2-HHB(F)-F | 10.0% |
| 3-HHB(F)-F | 10.0% |
| 5-HHB(F)-F | 10.0% |
| 2-HBB(F)-F | 10.0% |
| 3-HBB(F)-F | 10.0% |
| 5-HBB(F)-F | 10.0% |
| 2-HBB-F | 5.0% |
| 3-HBB-F | 5.0% |
| 3-HBB(F,F)-F | 8.0% |
| 3-HHBB(F,F)-F | 3.0% |
| 3-HB(F)VB-2 | 5.0% |
| 3-HB(F)VB-3 | 4.0%, |

a transparent point was T_{NI}=115.0(°C), a viscosity at 20°C was η₂₀=27.7 (mPa^{.}s), a refractive anisotropy at 25°C was Δn=0.134, a dielectric anisotropy at 20°C was Δε=5.7. The liquid crystal composition was sealed in a cell for OCB having a thickness of 6.0 µm, and a transition voltage (V_{CR}) at which a splay-alignment being transited to a bend-alignment was determined, to obtain V_{CR}=2.51(V). Also, a voltage holding ratio of the liquid crystal composition was determined, to obtain a voltage holding ratio at 25°C of 99.4%.

### Example 21

Concerning a liquid crystal composition consisted of

| | |
|---|---|
| 5-HHEBB(F,F)-F | 5.0% |
| 5-H2B(F)-F | 10.0% |
| 7-HB(F)-F | 3.0% |
| 7-HEB-F | 2.0% |
| 2-HHB(F)-F | 10.0% |
| 3-HHB(F)-F | 10.0% |
| 5-HHB(F)-F | 10.0% |
| 2-HBB(F)-F | 6.0% |
| 3-HBB(F)-F | 6.0% |
| 5-HBB(F)-F | 6.0% |
| 2-H2HB(F)-F | 6.0% |
| 3-H2HB(F)-F | 6.0% |
| 5-H2HB(F)-F | 6.0% |
| 3-HBB-1 | 8.0% |
| 101-HBBH-3 | 2.0% |
| 101-HBBH-4 | 2.0% |
| 3-HEBEB-F | 2.0%, |

a transparent point was T_{NI}=103.5(°C), a viscosity at 20°C was η₂₀=25.9 (mPa·s), a refractive anisotropy at 25°C was Δn=0.100, a dielectric anisotropy at 20°C was Δε=5.0. The liquid crystal composition was sealed in a cell for OCB having a thickness of 6.0 µm, and a transition voltage (V_{CR}) at which a splay-alignment being transited to a bend-alignment was determined, to obtain V_{CR}=2.63(V). Also, a voltage holding ratio of the liquid crystal composition was determined, to obtain a voltage holding ratio at 25°C of 99.0%.

### Example 22

Concerning a liquid crystal composition consisted of

| | |
|---|---|
| 2-HHEBB(F,F)-F | 10.0% |
| 5-HHEBB(F,F)-F | 3.0% |
| 2-HHB-OCF₃ | 14.0% |
| 3-HHB-OCF₃ | 13.0% |
| 5-HHB-OCF₃ | 12.0% |
| 3-HH2B-OCF₃ | 5.0% |
| 5-HH2B-OCF₃ | 5.0% |
| 3-HBB(F)-F | 16.0% |
| 5-HBB(F)-F | 16.0% |
| 3-HBB(F)-OCF₂CF₂H | 4.0% |
| 3-HBB(F)-OCF₂CFHCF₃ | 2.0% |
| 3-HHB(F)-F | 10.0% |
| 5-HHB(F)-F | 10.0% |
| 2-HBB(F)-F | 5.0% |
| 3-HBB(F)-F | 5.0% |
| 5-HBB(F)-F | 6.0% |
| 2-H2HB(F)-F | 6.0% |
| 3-H2HB(F)-F | 6.0% |
| 5-H2HB(F)-F | 6.0% |
| 3-HBB-1 | 10.0% |
| 101-HBBH-3 | 2.0% |
| 101-HBBH-4 | 2.0% |
| 3-HEBEB-F | 2.0%, |

a transparent point was T_{NI}=139.3(°C), a viscosity at 20°C was η₂₀=27.9(mPa·s), a refractive anisotropy at 25°C was Δn=0.117, a dielectric anisotropy at 20°C was Δε=5.8. The liquid crystal composition was sealed in a cell for OCB having a thickness of 6.0 µm, and a transition voltage (V_{CR}) at which a splay-alignment being transited to a bend-alignment was determined, to obtain V_{CR}=2.66(V). Also, a voltage holding ratio of the liquid crystal composition was determined, to obtain a voltage holding ratio at 25°C of 98.3.

### Example 23

Concerning a liquid crystal composition consisted of

| | |
|---|---|
| 5-HHEBB(F,F)-F | 5.0% |
| 2-HHB-OCF₃ | 10.0% |
| 3-HHB-OCF₃ | 10.0% |
| 5-HHB-OCF₃ | 10.0% |
| 3-HH2B-OCF₃ | 10.0% |
| 5-HH2B-OCF₃ | 10.0% |
| 4-H2BB(F)-F | 13.0% |
| 5-H2BB(F)-F | 10.0% |
| 3-HBB(F,F)-F | 7.0% |
| 3-HHB(F,F)-F | 7.0% |
| 3-HBB(F)-OCF₂CFHCF₃ | 2.0% |
| 3-HBB(F,F)-OCF₂CFHCF₃ | 2.0% |
| 5-HBBH-3 | 2.0% |
| 5-HB(F)BH-3 | 3.0%, |

a transparent point was T_{NI}=130.6(°C), a viscosity at 20°C was η₂₀=24.6 (mPa^{.}s), a refractive anisotropy at 25°C was Δn=0.110, a dielectric anisotropy at 20°C was Δε=5.6. The liquid crystal composition was sealed in a cell for OCB having a thickness of 6.0 µm, and a transition voltage (V_{CR}) at which a splay-alignment being transited to a bend-alignment was determined, to obtain V_{CR}=2.83(V). Also, a voltage holding ratio of the liquid crystal composition was determined, to obtain a voltage holding ratio at 25°C of 98.8.

### Example 24

Concerning a liquid crystal composition consisted of

| | |
|---|---|
| 5-H4HB-OCF₃ | 5.0% |
| 4-H2BB(F)-F | 5.0% |
| 5-H2BB(F)-F | 5.0% |
| 3-HHB-OCF₃ | 5.0% |
| 5-HBB(F,F) -OCF₂CFHCF₃ | 5.0% |
| 3-HBB-OCF₂CFHCF₃ | 5.0% |
| 3-HBB(F,F)-F | 10.0% |
| 5-HBB(F,F)-F | 10.0% |
| 3-HBEB-F | 15.0% |
| 3-HBEB(F,F)-F | 10.0% |
| 3-HB-CL | 10.0% |
| 3-HHB-CL | 5.0% |
| 3-HH2BB(F,F)-F | 5.0% |
| 3-HH-4 | 5.0%, |

a transparent point was T_{NI}=99.1 (°C), a viscosity at 20°C was η₂₀=28.2 (mPa·s), a refractive anisotropy at 25°C was Δn=0.119, a dielectric anisotropy at 20°C was Δε=8.2. The liquid crystal composition was sealed in a cell for OCB having a thickness of 6.0 µm, and a transition voltage (V_{CR}) at which a splay-alignment being transited to a bend-alignment was determined, to obtain V_{CR}=2.08(V). Also, a voltage holding ratio of the liquid crystal composition was determined, to obtain a voltage holding ratio at 25°C of 98.3%.

### Example 25

Concerning a liquid crystal composition consisted of

| | |
|---|---|
| 5-H4HB-OCF₃ | 12.0% |
| 5-H4HB(F,F)-CF₃ | 8.0% |
| 3-H4HB(F,F)-CF₃ | 14.4% |
| 5-H4HB(F,F)-F | 5.6% |
| 3-HB-CL | 7.8% |
| 5-HB-CL | 3.2% |
| 4-H2BB(F)-F | 8.0% |
| 5-H2BB(F)-F | 7.0% |
| 3-HHB-OCF₃ | 8.0% |
| 3-H2HB-OCF₃ | 4.0% |
| 3-HBB(F,F)-OCF₂CFHCF₃ | 8.0% |
| 5-HHEB-OCF₃ | 1.6% |
| 3-HBEB(F,F)-F | 5.0% |
| 101-HH-3 | 1.4% |
| 5-H2B(F)-F | 2.0% |
| 3-HHB-01 | 2.0% |
| 3-HHEBB-F | 2.0%, |

a transparent point was T_{NI}=68.2 (°C), a viscosity at 20°C was η₂₀=24.2(mPa·s), a refractive anisotropy at 25°C was Δn=0.100, a dielectric anisotropy at 20°C was Δ**ε**=7.3. The liquid crystral composition was sealed in a cell for OCB having a thickness of 6.0 µm, and a transition voltage (V_{CR}) at which a splay-alignment being transited to a bend-alignment was determined, to obtain V_{CR}=2.14(V). Also, a voltage holding ratio of the liquid crystal composition was determined, to obtain a voltage holding ratio at 25°C of 98.4%.

### Example 26

Concerning a liquid crystal composition consisted of

| | |
|---|---|
| 3-PyB(F)-F | 13.0% |
| 7-HB(F)-F | 12.0% |
| 2-HHB(F)-F | 12.0% |
| 3-HHB(F)-F | 12.0% |
| 5-HHB(F)-F | 12.0% |
| 2-HBB(F)-F | 8.0% |
| 3-HBB(F)-F | 8.0% |
| 5-HBB(F)-F | 6.0% |
| 2-PyBH-3 | 5.0% |
| 3-PyBH-3 | 5.0% |
| 4-PyBH-3 | 5.0% |
| 3-HB(2F,3F)-4 | 2.0%, |

a transparent point was T_{NI}=78.2 (°C), a viscosity at 20°C was η₂₀=32.2 (mPa^{.}s), a refractive anisotropy at 25°C was Δn=0.132, a dielectric anisotropy at 20°C was Δε=6.2. The liquid crystal composition was sealed in a cell for OCB having a thickness of 6.0 µm, and a transition voltage (V_{CR}) at which a splay-alignment being transited to a bend-alignment was determined, to obtain V_{CR}=2.12(V). Also, a voltage holding ratio of the liquid crystal composition was determined, to obtain a voltage holding ratio at 25°C of 98.0%.

### Example 27

Concerning a liquid crystal composition consisted of

| | |
|---|---|
| 3-PyB(F)-F | 16.0% |
| 3-HB-O2 | 18.0% |
| 3-HB-O4 | 5.0% |
| 2-HHB(F)-F | 3.0% |
| 3-HHB(F)-F | 4.0% |
| 5-HHB(F)-F | 4.0% |
| 2-HBB(F)-F | 4.0% |
| 3-HBB(F)-F | 4.0% |
| 5-HBB(F)-F | 4.0% |
| 2-PyBB-F | 9.0% |
| 3-PyBB-F | 9.0% |
| 4-PyBB-F | 9.0% |
| 5-PyBB-F | 9.0% |
| 3-HHB(2F,3F)-4 | 2.0%, |

a transparent point was T_{NI}=82.2 (°C), a viscosity at 20°C was η₂₀=50.2 (mPa^{.}s), a refractive anisotropy at 25°C was Δn=0.165, a dielectric anisotropy at 20°C was Δε=8.5. The liquid crystal composition was sealed in a cell for OCB having a thickness of 6.0 µm, and a transition voltage (V_{CR}) at which a splay-alignment being transited to a bend-alignment was determined, to obtain V_{CR}=2.25(V). Also, a voltage holding ratio of the liquid crystal composition was determined, to obtain a voltage holding ratio at 25°C of 98.3%.

### Example 28

Concerning a liquid crystal composition consisted of

| | |
|---|---|
| 3-PyB(F)-F | 13.0% |
| 7-HB(F)-F | 4.0% |
| 2-HHB(F)-F | 15.0% |
| 3-HHB(F)-F | 15.0% |
| 5-HHB(F)-F | 14.0% |
| 2-HBB(F)-F | 8.0% |
| 3-HBB(F)-F | 8.0% |
| 5-HBB(F)-F | 8.0% |
| 2-PyBH-3 | 9.0% |
| 3-PyBH-3 | 4.0% |
| 3-HBB(2F,3F)-4 | 2.0%, |

a transparent point was T_{NI}=86.7 (°C), a viscosity at 20°C was η₂₀=28.7 (mPa^{.}s), a refractive anisotropy at 25°C was Δn=0.103, a dielectric anisotropy at 20°C was Δε=5.8. The liquid crystal composition was sealed in a cell for OCB having a thickness of 6.0 µm, and a transition voltage (V_{CR}) at which a splay-alignment being transited to a bend-alignment was determined, to obtain V_{CR}=2.32(V). Also, a voltage holding ratio of the liquid crystal composition was determined, to obtain a voltage holding ratio at 25°C of 98.7%.

### Example 29

Concerning a liquid crystal composition consisted of

| | |
|---|---|
| 5-HB-CL | 22.0% |
| 2-HBB(F)-F | 12.0% |
| 3-HBB(F)-F | 12.0% |
| 5-HBB(F)-F | 12.0% |
| 4-HHB-CL | 10.0% |
| 3-HBB(F,F)-F | 15.0% |
| 5-HBB(F,F)-F | 15.0% |
| 3-HB(2F,3F)H-4 | 2.0%, |

a transparent point was T_{NI}=66.7 (°C), a viscosity at 20°C was η₂₀=22.7(mPa·s), a refractive anisotropy at 25°C was Δn=0.105, a dielectric anisotropy at 20°C was Δε=5.1. The liquid crystal composition was sealed in a cell for OCB having a thickness of 6.0 µm, and a transition voltage (V_{CR}) at which a splay-alignment being transited to a bend-alignment was determined, to obtain V_{CR}=2.37(V). Also, a voltage holding ratio of the liquid crystal composition was determined, to obtain a voltage holding ratio at 25°C of 98.2%.

### Example 30

Concerning a liquid crystal composition consisted of

| | |
|---|---|
| 3-H2HB(F,F)-F | 5.0% |
| 5-H2HB(F,F)-F | 5.0% |
| 3-HH2B(F,F)-F | 6.0% |
| 4-H2BB(F,F)-F | 10.0% |
| 3-HBB(F,F)-F | 29.0% |
| 5-HBB(F,F)-F | 29.0% |
| 3-HBEB(F,F)-F | 3.0% |
| 5-HBEB(F,F)-F | 3.0% |
| 3-HHEB(F,F)-F | 10.0% |
| 3-HBPn-4 | 1.0%, |

a transparent point was T_{NI}=63.9 (°C), a viscosity at 20°C was η₂₀=35.1 (mPa^{.}s), a refractive anisotropy at 25°C was Δn=0.102, a dielectric anisotropy at 20°C was Δε=9.6. The liquid crystal composition was sealed in a cell for OCB having a thickness of 6.0 µm, and a transition voltage (V_{CR}) at which a splay-alignment being transited to a bend-alignment was determined, to obtain V_{CR}=1.60(V). Also, a voltage holding ratio of the liquid crystal composition was determined, to obtain a voltage holding ratio at 25°C of 98.3%.

### Effect of the Invention

As shown in Examples, there can be realized an active driving OCB element with a low voltage driving property, a high contrast, a wide viewing angle and a high reliability according to the invention.

## Claims

1. An active driving OCB (Optically Compensated Bend or Birefringence) liquid crystal display element, wherein
a) a sealed cell formed of two substrates having transparent electrodes is used,
b) a nematic liquid crystal mixture having a positive dielectric anisotropy and a high resistance is contained in the cell,
c) rubbing directions of aligned membranes coated on the two upper and lower substrates are made in the same direction (a twist angle of 0°),
d) an arrangement is made such that one angle constituted by a pre-tilt direction of liquid crystals on the aligned membranes and the substrates being +θ and the other being -θ,
e) a biaxial phase different film is arranged on the top of the upper substrate of the upper and lower substrates in the cell, and polarized plates are arranged above and below the cell containing the arranged biaxial phase different film, and
f) respective pixels in the sealed cell are switched, characterized in that the said nematic liquid crystal composition contains at least one compound having (a) terminal group structure(s) of the following general formula (I) 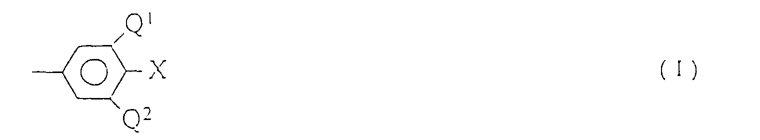 (wherein, X denotes F, Cl, CF₃, OCF₃, CF₂H, OCF₂H, OCF₂CF₂H, OCF₂Cl or OCF₂CFHCF₃, Q¹ and Q² denote independently each other H or F.) as the first component.

2. A liquid crystal display element according to Claim 1, characterized in that the compound of the general formula (I) being one expressed by the general formulae (I-a), (I-b) and (I-c) 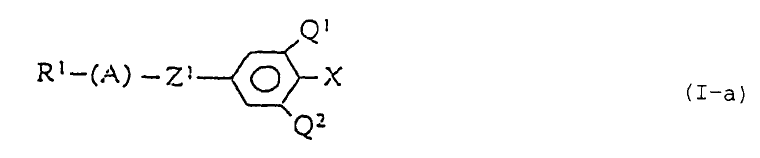 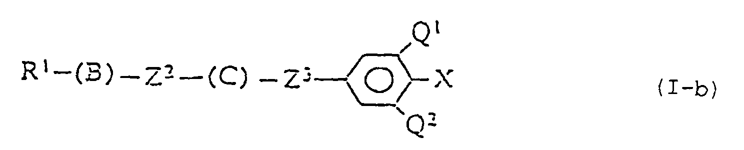 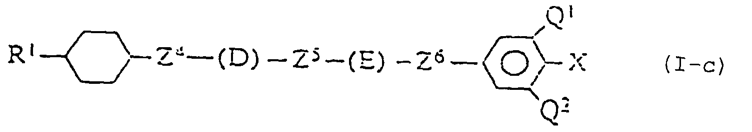 (whrein, R¹ denotes an alkyl group or a fluoroalkyl group with from 1 to 10 carbon atoms, of which optional one or non-adjacent two or more than two methylene (-CH₂) group(s) may be optionally substituted by (an) oxygen atom(s) or -CH=CH-; X denotes F, Cl, CF₃, OCF₃, CF₂H, OCF₂H, OCF₂CF₂H, OCF₂Cl or OCF₂CFHCF₃; Q¹ and Q² denote independently each other H or F; Z¹, Z², Z³, Z⁴, Z⁵ and Z⁶ denote independently each other -CH₂CH₂-, -(CH₂)₄-, -COO-, -CF₂O-, -CH=CH- or a single bond; A, B, C, D and E denote independently each other trans-1,4-cyclohexylene, pyrimidine-2,5-diyl, 1,4-cyclohexenylene or 1,4-phenylene optionally substituted with F at a branching H.).

3. A liquid crystal display element according to Claim 1 or 2, characterized in that an amount of the first component used is from 50 to 100% by weight based on the total weight of the liquid crystal composition.

4. An active driving OCB (Optically Compensated Bend or Birefringence) liquid crystal display element, wherein
a) a sealed cell formed of two substrates having transparent electrodes is used,
b) a nematic liquid crystal mixture having a positive dielectric anisotropy and a high resistance is contained in the cell,
c) rubbing directions of aligned membranes coated on the two upper and lower substrates are made in the same direction (a twist angle of 0° ),
d) an arrangement is made such that one angle constituted by a pre-tilt direction of liquid crystals on the aligned membranes and the substrates being +θ and the other being -θ,
e) a biaxial phase different film is arranged on the top of the upper substrate of the upper and lower substrates in the cell, and polarized plates are arranged above and below the cell containing the arranged biaxial phase different film, and
f) respective pixels in the sealed cell are switched,
characterized in that the said nematic liquid crystal composition contains at least one compound having (a) terminal group structure(s) of the following general formula (I) 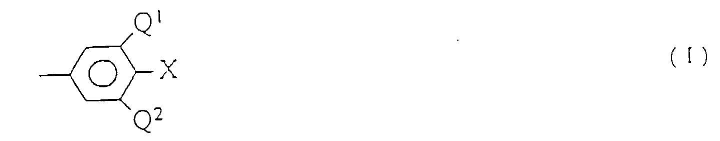 (wherein, X denotes F, Cl, CF₃, OCF₃, CF₂H, OCF₂H, OCF₂CF₂H, OCF₂Cl or OCF₂CFHCF₃, Q¹ and Q² denote independently each other H or F.) as the first component and that at least one compound selected from the group of compound shown by the general formulae (II), (III) and (IV) is contained as the second component:
R²-(G)-Z⁷-(J)-R³ (II)
(wherein, R² and R³ denote independently each other an alkyl group or a fluoroalkyl group with from 1 to 10 carbon atoms, in which optional one or non-adjacent two or more than two methylene group(s) may be substituted by (an) oxygen atom(s) or -CH=CH-; G and J denote independently each other trans-1,4-cyclohexylene, 1,4-phenylene, or pyrimidine-2,5-diyl; and Z⁷ denotes -CH₂CH₂-, -COO-, -CH=CH-, -C≡C- or a single bond.),
R⁴-(K)-Z⁸-(L)-Z⁹-(M)-R⁵ (III)
(wherein, R⁴ and R⁵ denote independently each other an alkyl group or a fluoroalkyl group with from 1 to 10 carbon atoms, in which optional one or non-adjacent two or more than two methylene group(s) may be substituted by (an) oxygen atom(s) or -CH=CH-; K denotes trans-1,4-cyclohexylene, 1,4-phenylene or pyrimidine-2,5-diyl; L and M denote independently each other trans-1,4-cyclohexylene or 1,4-phenylene optionally substituted by F at one branching H; Z⁸ and Z⁹ denote independently each other -CH₂CH₂-, -CH=CH-, -C≡C-, -COO- or a single bond), and 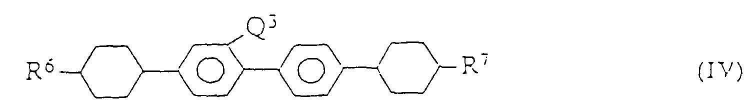 (wherein, R⁶ and R⁷ denote independently each other an alkyl group or a fluoroalkyl group with from 1 to 10 carbon atoms, in which optional one or non-adjacent two or more than two methylene group(s) may be substituted by (an) oxygen atom(s) or -CH=CH-, and Q³ denotes H or F.).

5. A liquid crystal display element according to Claim 4, characterized in that the amount of the second component used is 40% or less than 40% by weight based on the total weight of the liquid crystal composition.

6. An active driving OCB (Optically Compensated Bend or Birefringence) liquid
crystal display element, wherein
a) a sealed cell formed of two substrates having transparent electrodes is used,
b) a nematic liquid crystal mixture having a positive dielectric anisotropy and a high resistance is contained in the cell,
c) rubbing directions of aligned membranes coated on the two upper and lower substrates are made in the same direction (a twist angle of 0° ),
d) an arrangement is made such that one angle constituted by a pre-tilt direction of liquid crystals on the aligned membranes and the substrates being +θ and the other being -θ,
e) a biaxial phase different film is arranged on the top of the upper substrate of the upper and lower substrates in the cell, and polarized plates are arranged above and below the cell containing the arranged biaxial phase different film, and
f) respective pixels in the sealed cell are switched,
characterized in that the said nematic liquid crystal composition contains at least one compound having (a) terminal group structure(s) of the following general formula (I) 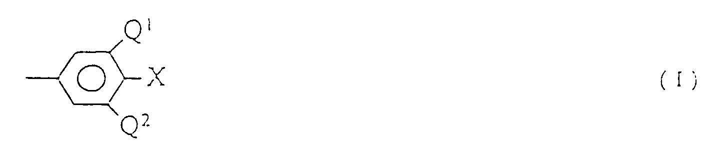 (wherein, X denotes F, Cl, CF₃, OCF₃, CF₂H, OCF₂H, OCF₂CF₂H, OCF₂Cl or OCF₂CFHCF₃, Q¹ and Q² denote independently each other H or F.) as the first component and that at least one compound selected from the group of compound shown by the general formulae (II), (III) and (IV) is contained as the second component:
R²-(G)-Z⁷-(J)-R³ (II)
(wherein, R² and R³ denote independently each other an alkyl group or a fluoroalkyl group with from 1 to 10 carbon atoms, in which optional one or non-adjacent two or more than two methylene group(s) may be substituted by (an) oxygen atom(s) or -CH=CH-; G and J denote independently each other trans-1,4-cyclohexylene, 1,4-phenylene, or pyrimidine-2,5-diyl; and Z⁷ denotes -CH₂CH₂-, -COO-, -CH=CH-, -C≡C- or a single bond.),
R⁴-(K)-Z⁸-(L)-Z⁹-(M)-R⁵ (III)
(wherein, R⁴ and R⁵ denote independently each other an alkyl group or a fluoroalkyl group with from 1 to 10 carbon atoms, in which optional one or non-adjacent two or more than two methylene group(s) may be substituted by (an) oxygen atom(s) or -CH=CH-; K denotes trans-1,4-cyclohexylene, 1,4-phenylene or pyrimidine-2,5-diyl; L and M denote independently each other trans-1,4-cyclohexylene or 1,4-phenylene optionally substituted by F at one branching H; Z⁸ and Z⁹ denote independently each other -CH₂CH₂-, -CH=CH-, -C≡C-, -COO- or a single bond.), and 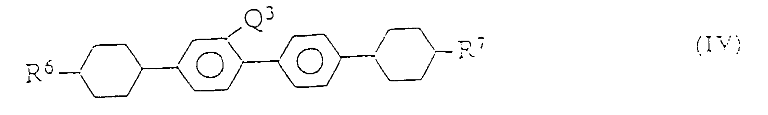 (wherein, R⁶ and R⁷ denote independently each other an alkyl group or a fluoroalkyl group with from 1 to 10 carbon atoms, in which optional one or non-adjacent two or more than two methylene group(s) may be substituted by (an) oxygen atom(s) or -CH=CH-, and Q³ denotes H or F.) and that one or more than one compound(s) selected from the group of compounds shown by the general formulae (VI-a), (VI-b), (VI-c), (VI-d) and (VI-e) is (are) contained as the third component: 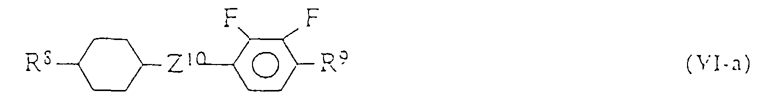 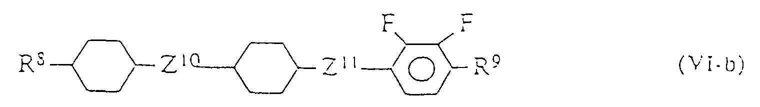 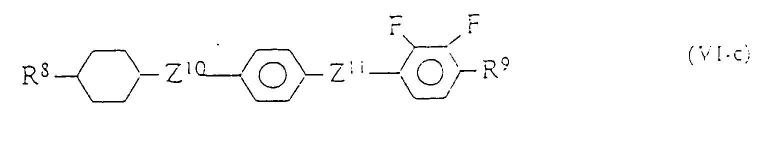 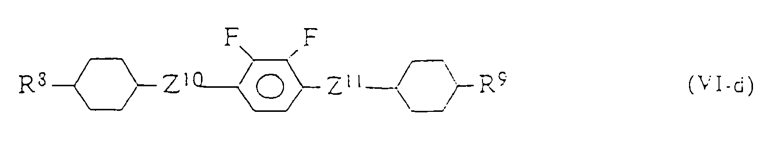 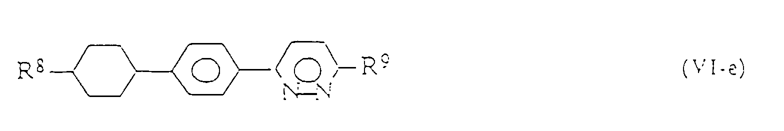 (wherein, R⁸ denotes an alkyl group or a fluoroalkyl group with from 1 to 10 carbon atoms, in which optional one or non-adjacent two or more than two methylene group(s) may be substituted by (an) oxygen atom(s) or -CH=CH-, R⁹ denotes an alkyl group or a fluoroalkyl group with from 1 to 10 carbon atoms, in which optional one or non-adjacent two or more than two methylene group(s) may be substituted by (an) oxygen atom or -CH=CH-, CF₃ or CF₂H; Z¹⁰ and Z¹¹ denote independently each other -CH₂CH₂-, -COO- or a single bond.).

7. A liquid crystal display element according to Claim 6, characterized in that an amount of the third component used is 20% or less than 20% based on the total weight of the liquid crystal composition.

8. A liquid crystal display element according to any of Claims 1 to 7, characterized in that a nematic phase range in the liquid crystal composition is 60°C or above 60°C, an optical anisotropy Δn is 0.1 or more than 0.1, an elastic constant ratio K₃/K₁ of a splay mode and a bend mode is 1.7 or less than 1.7, and a dielectric anisotropy Δε is 5.0 or more than 5.0.

9. Use of a liquid crystal composition in an active driving OCB (Optically Compensated Bend or Birefringence) liquid crystal display element, wherein
a) a sealed cell formed of two substrates having transparent electrodes is used,
b) a nematic liquid crystal mixture having a positive dielectric anisotropy and a high resistance is contained in the cell,
c) rubbing directions of aligned membranes coated on the two upper and lower substrates are made in the same direction (a twist angle of 0° ),
d) an arrangement is made such that one angle constituted by a pre-tilt direction of liquid crystals on the aligned membranes and the substrates being +θ and the other being -θ,
e) a biaxial phase different film is arranged on the top of the upper substrate of the upper and lower substrates in the cell, and polarized plates are arranged above and below the cell containing the arranged biaxial phase different film, and
f) respective pixels in the sealed cell are switched,
characterized in that the said nematic liquid crystal composition contains at least one compound having (a) terminal group structure(s) of the following general formula (I) 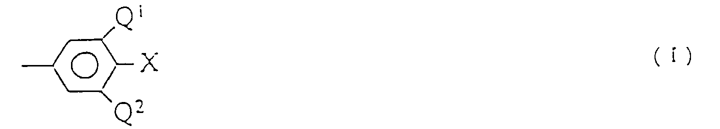 (wherein, X denotes F, Cl, CF₃, OCF₃, CF₂H, OCF₂H, OCF₂CF₂H, OCF₂Cl or OCF₂CFHCF₃, Q¹ and Q² denote independently each other H or F.) as the first component.

10. Use of a liquid crystal composition in an active driving OCB (Optically Compensated Bend or Birefringence) liquid crystal display element, wherein
a) a sealed cell formed of two substrates having transparent electrodes is used,
b) a nematic liquid crystal mixture having a positive dielectric anisotropy and a high resistance is contained in the cell,
c) rubbing directions of aligned membranes coated on the two upper and lower substrates are made in the same direction (a twist angle of 0° ),
d) an arrangement is made such that one angle constituted by a pre-tilt direction of liquid crystals on the aligned membranes and the substrates being +θ and the other being -θ,
e) a biaxial phase different film is arranged on the top of the upper substrate of the upper and lower substrates in the cell, and polarized plates are arranged above and below the cell containing the arranged biaxial phase different film, and
f) respective pixels in the sealed cell are switched,
characterized in that the said nematic liquid crystal composition contains at least one compound having (a) terminal group structure(s) of the following general formula (I) 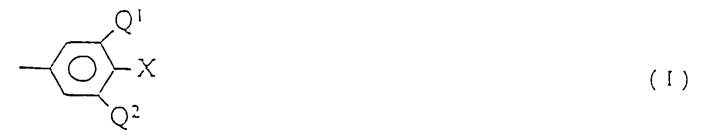 (wherein, X denotes F, Cl, CF₃, OCF₃, CF₂H, OCF₂H, OCF₂CF₂H, OCF₂Cl or OCF₂CFHCF₃, Q¹ and Q² denote independently each other H or F.) as the first component and that at least one compound selected from the group of compound shown by the general formulae (II), (III) and (IV) is contained as the second component:
R²-(G)-Z⁷-(J)-R³ (II)
(wherein, R² and R³ denote independently each other an alkyl group or a fluoroalkyl group with from 1 to 10 carbon atoms, in which optional one or non-adjacent two or more than two methylene group(s) may be substituted by (an) oxygen atom(s) or -CH=CH-; G and J denote independently each other trans-1,4cyclohexylene, 1,4-phenylene, or pyrimidine-2,5-diyl; and Z⁷ denotes -CH₂CH₂-, -COO-, -CH=CH-, -C≡C- or a single bond.),
R⁴-(K)-Z⁸-(L)-Z⁹-(M)-R⁵ (III)
(wherein, R⁴ and R⁵ denote independently each other an alkyl group or a fluoroalkyl group with from 1 to 10 carbon atoms, in which optional one or non-adjacent two or more than two methylene group(s) may be substituted by (an) oxygen atom(s) or -CH=CH-; K denotes trans-1,4-cyclohexylene, 1,4-phenylene or pyrimidine-2,5-diyl; L and M denote independently each other trans-1,4-cyclohexylene or 1,4-phenylene optionally substituted by F at one branching H; Z⁸ and Z⁹ denote independently each other -CH2CH2-, -CH=CH-, -C≡C-, -COO- or a single bond.), and 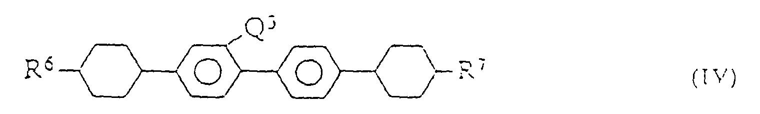 (wherein, R⁶ and R⁷ denote independently each other an alkyl group or a fluoroalkyl group with from 1 to 10 carbon atoms, in which optional one or non-adjacent two or more than two methylene group(s) may be substituted by (an) oxygen atom(s) or -CH=CH-, and Q³ denotes H or F.).

11. Use of a liquid crystal composition in an active driving OCB (Optically compensated Bend or Birefringence) liquid crystal display element, wherein
a) a sealed cell formed of two substrates having transparent electrodes is used,
b) a nematic liquid crystal mixture having a positive dielectric anisotropy and a high resistance is contained in the cell,
c) rubbing directions of aligned membranes coated on the two upper and lower substrates are made in the same direction (a twist angle of 0° ),
d) an arrangement is made such that one angle constituted by a pre-tilt direction of liquid crystals on the aligned membranes and the substrates being +θ and the other being -θ,
e) a biaxial phase different film is arranged on the top of the upper substrate of the upper and lower substrates in the cell, and polarized plates are arranged above and below the cell containing the arranged biaxial phase different film, and
f) respective pixels in the sealed cell are switched,
characterized in that the said nematic liquid crystal composition contains at least one compound having (a) terminal group structure(s) of the following general formula (I) 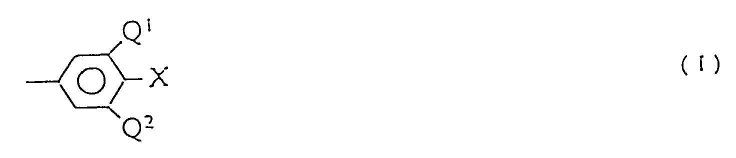 (wherein, X denotes F, Cl, CF₃, OCF₃, CF₂H, OCF₂H, OCF₂CF₂H, OCF₂Cl or OCF₂CFHCF₃, Q¹ and Q² denote independently each other H or F.) as the first component and that at least one compound selected from the group of compound shown by the general formulae (II), (III) and (IV) is contained as the second component:
R²-(G)-Z⁷-(J)-R³ (II)
(wherein, R² and R³ denote independently each other an alkyl group or a fluoroalkyl group with from 1 to 10 carbon atoms, in which optional one or non-adjacent two or more than two methylene group(s) may be substituted by (an) oxygen atom(s) or -CH=CH-; G and J denote independently each other trans-1,4-cyclohexylene, 1,4-phenylene, or pyrimidine-2,5-diyl; and Z⁷ denotes -CH₂CH₂-,-COO-, -CH=CH-, -C≡C- or a single bond.),
R⁴-(K)-Z⁸-(L)-Z⁹-(M)-R⁵ (III)
(wherein, R⁴ and R⁵ denote independently each other an alkyl group or a fluoroalkyl group with from 1 to 10 carbon atoms, in which optional one or non-adjacent two or more than two methylene group(s) may be substituted by (an) oxygen atom(s) or -CH=CH-; K denotes trans-1,4-cyclohexylene, 1,4-phenylene or pyrimidine-2,5-diyl; L and M denote independently each other trans-1,4-cyclohexylene or 1,4-phenylene optionally substituted by F at one branching H; Z⁸ and Z⁹ denote independently each other -CH₂CH₂-, -CH=CH-, -C≡C-, -COO- or a single bond), and 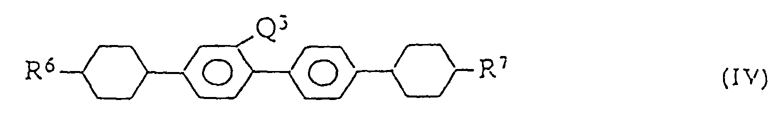 (wherein, R⁶ and R⁷ denote independently each other an alkyl group or a fluoroalkyl group with from 1 to 10 carbon atoms, in which optional one or non-adjacent two or more than two methylene group(s) may be substituted by (an) oxygen atom(s) or -CH=CH-, and Q³ denotes H or F.) and that one or more than one compound(s) selected from the group of compounds shown by the general formulae (VI-a), (VI-b), (VI-c), (VI-d) and (VI-e) is (are) contained as the third component: 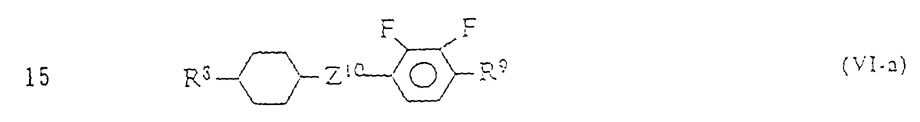 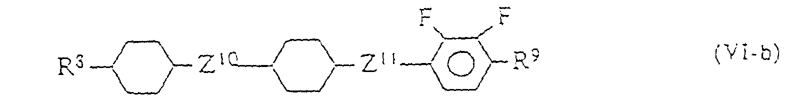 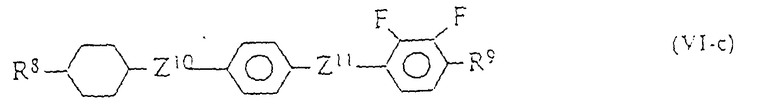 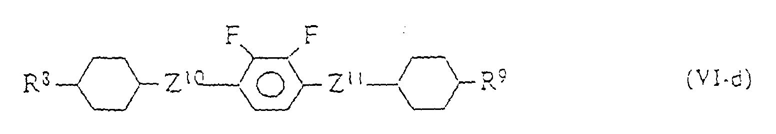 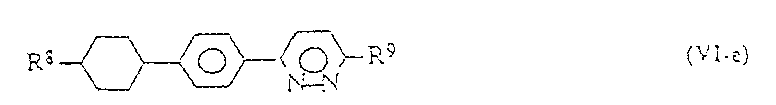 (wherein, R⁸ denotes an alkyl group or a fluoroalkyl group with from 1 to 10 carbon atoms, in which optional one or non-adjacent two or more than two methylene group(s) may be substituted by (an) oxygen atom(s) or -CH=CH-, R⁹ denotes an alkyl group or a fluoroalkyl group with from 1 to 10 carbon atoms, in which optional one or non-adjacent two or more than two methylene group(s) may be substituted by (an) oxygen atom or -CH=CH-, CF₃ or CF₂H; Z¹⁰ and Z¹¹ denote independently each other -CH₂CH₂-, -COO- or a single bond.).

## Patentansprüche

1. Aktiv treibendes OCB (Optically Compensated Bend or Birefringence) Flüssigkristall-Anzeigeelement, worin
a) eine abgedichtete Zelle, die aus zwei Substraten mit transparenten Elektroden gebildet ist, verwendet wird,
b) eine nematische Flüssigkristallmischung mit einer positiven dielektrischen Anisotropie und einem hohen Widerstand in der Zelle enthalten ist,
c) Reibrichtungen von ausgerichteten Membranen, die auf den beiden oberen und unteren Substraten geschichtet sind, in der gleichen Richtung vorliegen (Twistwinkel von 0°),
d) eine Anordnung vorliegt, dass der eine Winkel, der durch eine Pre-Tilt-Richtung der Flüssigkristalle auf den ausgerichteten Membranen und den Substraten erzeugt wird, +θ und der andere -θ ist,
e) ein Film mit unterschiedlicher biaxialer Phase auf der Oberseite des oberen Substrates der oberen und unteren Substrate in der Zelle angeordnet ist und polarisierte Platten oberhalb und unterhalb der Zelle angeordnet sind, die den angeordneten Film mit unterschiedlicher biaxialer Phase enthält, und
f) entsprechende Pixel in der abgedichteten Zelle geschaltet werden,
dadurch **gekennzeichnet**, dass
die nematische Flüssigkristallzusammensetzung zumindest eine Verbindung mit (a) Struktur(en) der terminalen Gruppe mit der folgenden allgemeinen Formel (I) als erste Komponente enthält: 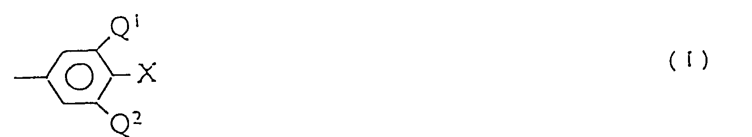 (worin X F, Cl, CF_{3,} OCF₃, CF₂H, OCF₂H, OCF₂CF₂H, OCF₂Cl oder OCF₂CFHCF₃, Q¹ und Q² unabhängig voneinander H oder F sind).

2. Flüssigkristall-Anzeigeelement nach Anspruch 1, dadurch **gekennzeichnet**, dass die Verbindung der allgemeinen Formel (I) eine mit den allgemeinen Formeln (I-a), (I-b) und (I-c) ist: 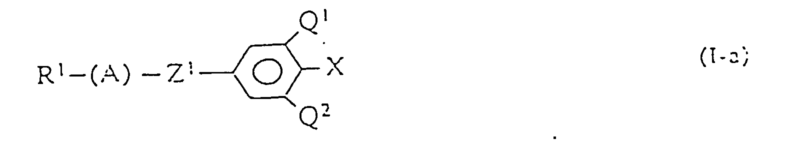 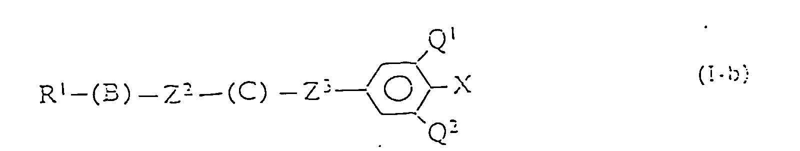 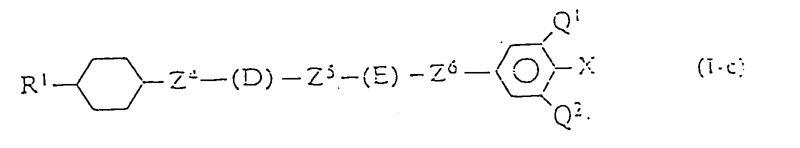 (worin R¹ eine Alkylgruppe oder Fluoralkylgruppe mit 1 bis 10 Kohlenstoffatomen ist, wobei wahlweise eine oder nicht benachbarte zwei oder mehr als zwei Methylen-(-CH₂)-Gruppen durch Sauerstoffatome oder -CH=CH- ersetzt sein können; X F, Cl, CF₃, OCF₃, CF₂H, OCF₂H, OCF₂CF₂H, OCF₂Cl oder OCF₂CFHCF₃ ist; Q¹ und Q² unabhängig jeweils H oder F sind; Z¹, Z², Z³, Z⁴, Z⁵ und Z⁶ jeweils unabhängig -CH₂CH₂-, -(CH₂)₄-, -COO-, -CF₂O-,
-CH=CH- oder eine Einfachbindung sind; A, B, C, D und E jeweils unabhängig eine trans-1,4-Cyclohexylen, Pyrimidin-2,5-diyl, 1,4-Cyclohexenylen oder 1,4-Phenylen sind, die wahlweise an einem verzweigenden H mit F substituiert sein können).

3. Flüssigkristall-Anzeigeelement nach Anspruch 1 oder 2, dadurch **gekennzeichnet**, dass die Menge der ersten Komponente 50 bis 100 Gew.% ist, bezogen auf das Gesamtgewicht der Flüssigkristallzusammensetzung.

4. Aktiv treibendes OCB (Optically Compensated Bend or Birefringence)-Flüssigkristall-Anzeigeelement, worin
a) eine abgedichtete Zelle, die aus zwei Substraten mit transparenten Elektroden gebildet ist, verwendet wird,
b) eine nematische Flüssigkristallmischung mit einer positiven dielektrischen Anisotropie und einem hohen Widerstand in der Zelle enthalten ist,
c) Reibrichtungen von ausgerichteten Membranen, die auf den beiden oberen und unteren Substraten geschichtet sind, in der gleichen Richtung vorliegen (Twistwinkel von 0°),
d) eine Anordnung vorliegt, dass der eine Winkel, der durch eine Pre-Tilt-Richtung der Flüssigkristalle auf den ausgerichteten Membranen und den Substraten erzeugt wird, +θ und der andere -θ ist,
e) ein Film mit unterschiedlicher biaxialer Phase auf der Oberseite des oberen Substrates der oberen und unteren Substrate in der Zelle angeordnet ist und polarisierte Platten oberhalb und unterhalb der Zelle angeordnet sind, die den angeordneten Film mit unterschiedlicher biaxialer Phase enthält, und
f) entsprechende Pixel in der abgedichteten Zelle geschaltet werden,
dadurch **gekennzeichnet**, dass
die nematische Flüssigkristall-Zusammensetzung zumindest eine Verbindung mit (a) Endgruppenstruktur(en) der folgenden allgemeinen Formel (I) als erste Komponente umfasst: 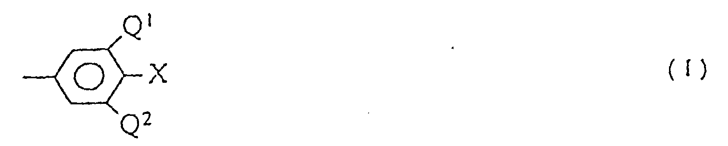 (worin X F, Cl, CF₃, OCF₃, CF₂H, OCF₂H, OCF₂CF₂H, OCF₂Cl oder OCF₂CFHCF₃, Q¹ und Q² unabhängig voneinander H oder F sind) und dass zumindest eine Verbindung, ausgewählt aus der Gruppe von Verbindungen mit den allgemeinen Formeln (II), (III) und (IV) als zweite Komponente enthalten ist:
R²-(G)-Z⁷-(J)-R³ (II)
(worin R² und R³ jeweils unabhängig eine Alkylgruppe oder Fluoralkylgruppe mit 1 bis 10 Kohlenstoffatomen sind, worin wahlweise eine oder nicht benachbarte zwei oder mehr als zwei Methylengruppen durch ein Sauerstoffatom oder -CH=CH- substituiert sein können; G und J unabhängig jeweils trans-1,4-Cyclohexylen, 1,4-Phenylen oder Pyrimidin-2,5-diyl sind; und Z⁷ -CH₂CH₂-, -COO-, -CH=CH-, -C≡C- oder eine Einfachbindung sind);
R⁴-(K)-Z⁸-(L)-Z⁹-(M)-R⁵ (III)
worin R⁴ und R⁵ jeweils unabhängig eine Alkylgruppe oder Fluoralkylgruppe mit 1 bis 10 Kohlenstoffatomen sind, worin wahlweise eine oder nicht benachbarte zwei oder mehr Methylengruppen durch ein Sauerstoffatom oder -CH=CH- substituiert sein können; K trans-1,4-Cyclohexylen, 1,4-Phenylen oder Pyrimidin-2,5-diyl ist; L und M jeweils unabhängig trans-1,4-Cyclohexylen oder 1,4-Phenylen bedeuten, die wahlweise durch F an einer Verzweigung substituiert sein können, Z⁸ und Z⁹ jeweils unabhängig -CH₂CH₂-, -CH=CH-, -C≡C-,
-COO- oder eine Einfachbindung sind; und 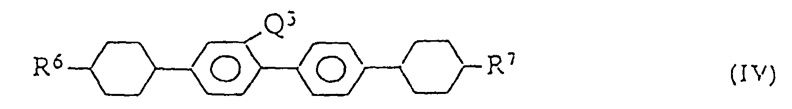 (worin R⁶ und R⁷ jeweils unabhängig eine Alkylgurppe oder eine Fluoralkylgruppe mit 1 bis 10 Kohlenstoffatomen sind, worin wahlweise eine oder nicht benachbarte zwei oder mehr als zwei Methylengruppen durch ein Sauerstoffatom oder -CH=CH- substituiert sein können; und Q³, H oder F ist).

5. Flüssigkristall-Anzeigeelement nach Anspruch 4, dadurch **gekennzeichnet**, dass die Menge der zweiten Komponente 40% oder weniger als 40% ist, bezogen auf das Gesamtgewicht der Flüssigkristallzusammensetzung.

6. Aktiv treibendes OCB (Optically Compensated Bend or Birefringence)-Flüssigkristall-Anzeigeelement, worin
a) eine abgedichtete Zelle, die aus zwei Substraten mit transparenten Elektroden gebildet ist, verwendet wird,
b) eine nematische Flüssigkristallmischung mit einer positiven dielektrischen Anisotropie und einem hohen Widerstand in der Zelle enthalten ist,
c) Reibrichtungen von ausgerichteten Membranen, die auf den beiden oberen und unteren Substraten geschichtet sind, in der gleichen Richtung vorliegen (Twistwinkel von 0°),
d) eine Anordnung vorliegt, dass der eine Winkel, der durch eine Pre-Tilt-Richtung der Flüssigkristalle auf den ausgerichteten Membranen und den Substraten erzeugt wird, +θ ist und der andere -θ ist,
e) ein Film mit unterschiedlicher biaxialer Phase auf der Oberseite des oberen Substrates der oberen und unteren Substrate in der Zelle angeordnet ist und polarisierte Platten oberhalb und unterhalb der Zelle angeordnet sind, die den angeordneten Film mit unterschiedlicher biaxialer Phase enthält, und
f) entsprechende Pixel in der abgedichteten Zelle geschaltet werden,
dadurch **gekennzeichnet**, dass
die nematische Flüssigkristall-Zusammensetzung zumindest eine Verbindung mit in (a) Endgruppenstruktur(en) der folgenden allgemeinen Formel (I) als erste Komponente umfasst: 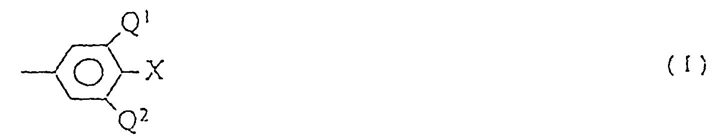 worin X F, Cl, CF₃, OCF₃, CF₂H, OCF₂H, OCF₂CF₂H, OCF₂Cl oder OCF₂CFHCF₃, Q¹ und Q² unabhängig voneinander H oder F sind und dass zumindest eine Verbindung, ausgewählt aus der Gruppe von Verbindungen mit den allgemeinen Formeln (II), (III) und (IV) als zweite Komponente enthalten ist:
R²-(G)-Z⁷-(J)-R³ (II)
(worin R² und R³ jeweils unabhängig eine Alkylgruppe oder Fluoralkylgruppe mit 1 bis 10 Kohlenstoffatomen sind, worin wahlweise eine oder nicht benachbarte zwei oder mehr als zwei Methylengruppen durch ein Sauerstoffatom oder -CH=CH- substituiert sein können; G und J unabhängig jeweils trans-1,4-Cyclohexylen, 1,4-Phenylen oder Pyrimidin-2,5-diyl sind; und Z⁷ -CH₂CH₂-, -COO-, -CH=CH-, -C≡C- oder eine Einfachbindung sind);
R⁴-(K)-Z⁸-(L)-Z⁹-(M)-R⁵ (III)
(worin R⁴ und R⁵ jeweils unabhängig eine Alkylgruppe oder Fluoralkylgruppe mit 1 bis 10 Kohlenstoffatomen sind, worin wahlweise eine oder nicht benachbarte zwei oder mehr Methylengruppen durch ein Sauerstoffatom oder -CH=CH- substituiert sein können; K trans-1,4-Cyclohexylen, 1,4-Phenylen oder Pyrimidin-2,5-diyl ist; L und M jeweils unabhängig trans-1,4-Cyclohexylen oder 1,4-Phenylen bedeuten, die wahlweise durch F an einer Verzweigung substituiert sein können, Z⁸ und Z⁹ jeweils unabhängig -CH₂CH₂-, -CH=CH-, -C≡C-,
-COO- oder eine Einfachbindung sind); und 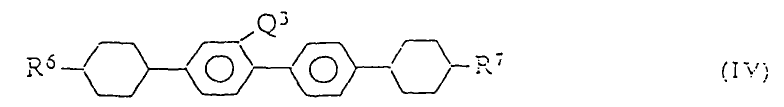 (worin R⁶ und R⁷ jeweils unabhängig eine Alkylgurppe oder eine Fluoralkylgruppe mit 1 bis 10 Kohlenstoffatomen sind, worin wahlweise eine oder nicht benachbarte zwei oder mehr als zwei Methylengruppen durch ein Sauerstoffatom oder -CH=CH- substituiert sein können; und Q³, H oder F ist), und dass eine oder mehr als eine Verbindungen, ausgewählt aus der Gruppe von Verbindungen, mit den allgemeinen Formeln (VI-a), (VI-b), (VI-c), (VI-d) und (VI-e) als dritte Komponente enthalten sind: 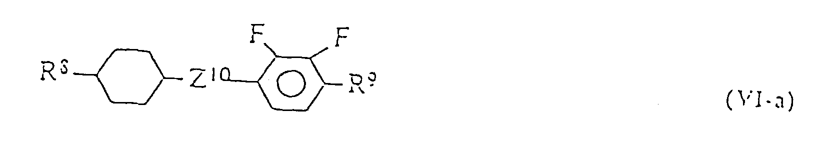 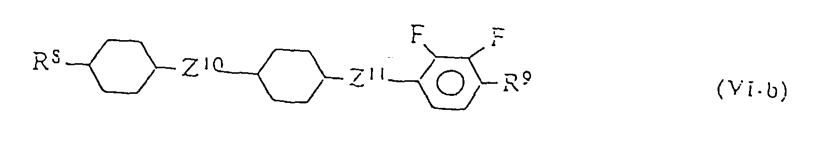 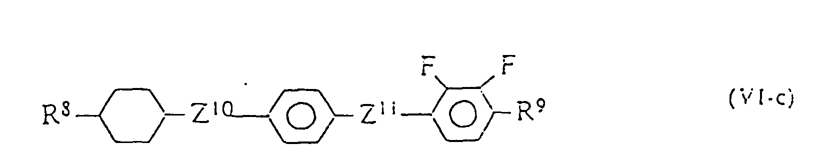 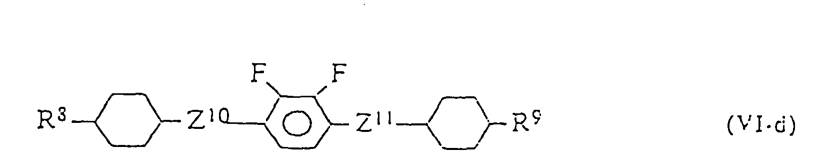 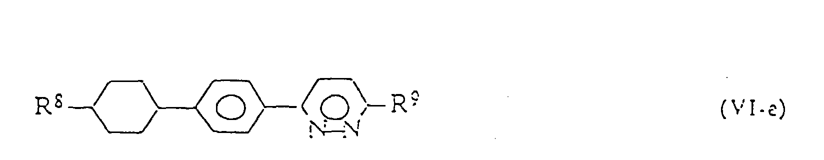 (worin R⁸ eine Alkylgruppe oder Fluoralkylgruppe mit 1 bis 10 Kohlenstoffatomen ist, worin wahlweise eine oder nicht benachbarte zwei oder mehr als zwei Methylengruppen durch ein Sauerstoffatom oder -CH=CH- substituiert sein können, R⁹ eine Alkylgruppe oder Fluoralkylgruppe mit 1 bis 10 Kohlenstoffatomen, worin wahlweise eine oder nicht benachbarte zwei oder mehr als zwei Methylengruppen durch ein Sauerstoffatom oder -CH=CH- substituiert sein können, CF₃ oder CF₂H ist, Z¹⁰ oder Z¹¹ unabhängig voneinander -CH₂CH₂-, -COO- oder eine Einfachbindung sind).

7. Flüssigkristall-Anzeigeelement nach Anspruch 6, dadurch **gekennzeichnet**, dass die Menge der dritten Komponente 20% oder weniger als 20% ist, bezogen auf das Gesamtgewicht der Flüssigkristallzusammensetzung.

8. Flüssigkristall-Anzeigeelement nach einem der Ansprüche 1 bis 7,
dadurch **gekennzeichnet**,dass der nematische Phasenbereich in der Flüssigkristallzuammensetzung 60°C oder mehr als 60°C ist, die optische Anisotropie Δn 0,1 oder mehr als 0,1 ist, dass Verhältnis der elastischen Konstanten K₃/K₁ eines Splay-Modus und eines Bend-Modus 1,7 oder weniger als 1,7 ist und dass die dielektrische Anisotropie Δε 5,0 oder mehr als 5,0 ist.

9. Verwendung einer Flüssigkristallzusammensetzung in einem aktiv treibenden OCB-(Optically Compensated Bend of Birefringence)-Flüssigkristall-Anzeigeelement, worin
a) eine abgedichtete Zelle, die aus zwei Substraten mit transparenten Elektroden gebildet ist, verwendet wird,
b) eine nematische Flüssigkristallmischung mit einer positiven dielektrischen Anisotropie und einem hohen Widerstand in der Zelle enthalten ist,
c) Reibrichtungen von ausgerichteten Membranen, die auf den beiden oberen und unteren Substraten geschichtet sind, in der gleichen Richtung vorliegen (Twistwinkel von 0°),
d) eine Anordnung vorliegt, dass der eine Winkel, der durch eine Pre-Tilt-Richtung der Flüssigkristalle auf den ausgerichteten Membranen und den Substraten erzeugt wird, +θ ist und der andere -θ ist,
e) ein Film mit unterschiedlicher biaxialer Phase auf der Oberseite des oberen Substrates der oberen und unteren Substrate in der Zelle angeordnet ist und polarisierte Platten oberhalb und unterhalb der Zelle angeordnet sind, die den angeordneten Film mit unterschiedlicher biaxialer Phase enthält, und
f) entsprechende Pixel in der abgedichteten Zelle geschaltet werden,
dadurch **gekennzeichnet**, dass
die nematische Flüssigkristall-Zusammensetzung zumindest eine Verbindung mit (a) Endgruppenstruktur(en) der folgenden allgemeinen Formel (I) als erste Komponente umfasst: 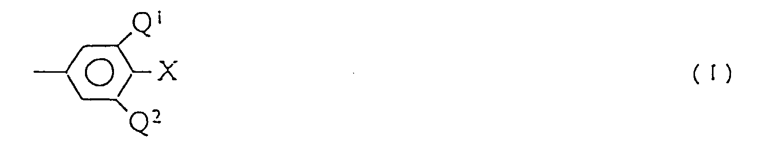 (worin X F, Cl, CF₃, OCF₃, CF₂H, OCF₂H, OCF₂CF₂H, OCF₂Cl oder OCF₂CFHCF₃, Q¹ und Q² unabhängig voneinander H oder F sind).

10. Verwendung einer Flüssigkristallzusammensetzung in einem aktiv treibenden OCB-(Optically Compensated Bend or Birefringence)-Flüssigkristall-Anzeigeelement, worin
a) eine abgedichtete Zelle, die aus zwei Substraten mit transparenten Elektroden gebildet ist, verwendet wird,
b) eine nematische Flüssigkristallmischung mit einer positiven dielektrischen Anisotropie und einem hohen Widerstand in der Zelle enthalten ist,
c) Reibrichtungen von ausgerichteten Membranen, die auf den beiden oberen und unteren Substraten geschichtet sind, in der gleichen Richtung vorliegen (Twistwinkel von 0°),
d) eine Anordnung vorliegt, dass der eine Winkel, der durch eine Pre-Tilt-Richtung der Flüssigkristalle auf den ausgerichteten Membranen und den Substraten erzeugt wird, +θ ist und der andere -θ ist,
e) ein Film mit unterschiedlicher biaxialer Phase auf der Oberseite des oberen Substrates der oberen und unteren Substrate in der Zelle angeordnet ist und polarisierte Platten oberhalb und unterhalb der Zelle angeordnet sind, die den angeordneten Film mit unterschiedlicher biaxialer Phase enthält, und
f) entsprechende Pixel in der abgedichteten Zelle geschaltet werden,
dadurch **gekennzeichnet**, dass
die nematische Flüssigkristall-Zusammensetzung zumindest eine Verbindung mit (a) Endgruppenstruktur(en) der folgenden allgemeinen Formel (I) als erste Komponente umfasst: 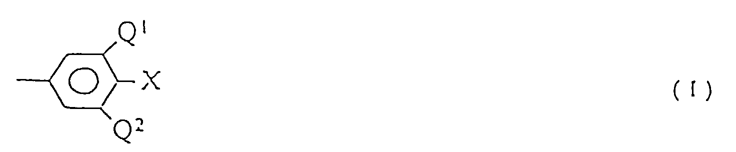 (worin X F, Cl, CF₃, OCF₃, CF₂H, OCF₂H, OCF₂CF₂H, OCF₂Cl oder OCF₂CFHCF₃, Q¹ und Q² unabhängig voneinander H oder F sind und dass zumindest eine Verbindung, ausgewählt aus der Gruppe von Verbindungen mit den allgemeinen Formeln (II), (III) und (IV) als zweite Komponente enthalten ist:
R²-(G)-Z⁷-(J)-R³ (II)
(worin R² und R³ jeweils unabhängig eine Alkylgruppe oder Fluoralkylgruppe mit 1 bis 10 Kohlenstoffatomen sind, worin wahlweise eine oder nicht benachbarte zwei oder mehr als zwei Methylengruppen durch ein Sauerstoffatom oder -CH=CH- substituiert sein können; G und J unabhängig jeweils trans1,4-Cyclohexylen, 1,4-Phenylen oder Pyrimidin-2,5-diyl sind; und Z⁷ -CH₂CH₂-, -COO-, -CH=CH-, -C≡C- oder eine Einfachbindung sind);
R⁴-(K)-Z⁸-(L)-Z⁹-(M)-R⁵ (III)
(worin R⁴ und R⁵ jeweils unabhängig eine Alkylgruppe oder Fluoralkylgruppe mit 1 bis 10 Kohlenstoffatomen sind, worin wahlweise eine oder nicht benachbarte zwei oder mehr Methylengruppen durch ein Sauerstoffatom oder -CH=CH- substituiert sein können; K trans-1,4-Cyclohexylen, 1,4-Phenylen oder Pyrimidin-2,5-diyl ist; L und M jeweils unabhängig trans-1,4-Cyclohexylen oder 1,4-Phenylen bedeuten, die wahlweise durch F an einer Verzweigung substituiert sein können, Z⁸ und Z⁹ jeweils unabhängig -CH₂CH₂-, -CH=CH-, -C≡C-, -COO- oder eine Einfachbindung sind); und 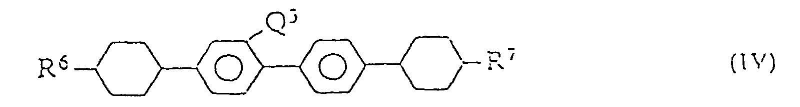 (worin R⁶ und R⁷ jeweils unabhängig eine Alkylgurppe oder eine Fluoralkylgruppe mit 1 bis 10 Kohlenstoffatomen sind, worin wahlweise eine oder nicht benachbarte zwei oder mehr als zwei Methylengruppen durch ein Sauerstoffatom oder -CH=CH- substituiert sein können; und Q³ H oder F ist).

11. Verwendung einer Flüssigkristall-Zusammensetzung in einem aktiv treibenden OCB-(Optically Compensated Bend or Birefringence)-Flüssigkristall-Anzeigeelement, worin
a) eine abgedichtete Zelle, die aus zwei Substraten mit transparenten Elektroden gebildet ist, verwendet wird,
b) eine nematische Flüssigkristallmischung mit einer positiven dielektrischen Anisotropie und einem hohen Widerstand in der Zelle enthalten ist,
c) Reibrichtungen von ausgerichteten Membranen, die auf den beiden oberen und unteren Substraten geschichtet sind, in der gleichen Richtung vorliegen (Twistwinkel von 0°),
d) eine Anordnung vorliegt, dass der eine Winkel, der durch eine Pre-Tilt-Richtung der Flüssigkristalle auf den ausgerichteten Membranen und den Substraten erzeugt wird, +θ ist und der andere -θ ist,
e) ein Film mit unterschiedlicher biaxialer Phase auf der Oberseite des oberen Substrates der oberen und unteren Substrate in der Zelle angeordnet ist und polarisierte Platten oberhalb und unterhalb der Zelle angeordnet sind, die den angeordneten Film mit unterschiedlicher biaxialer Phase enthält, und
f) entsprechende Pixel in der abgedichteten Zelle geschaltet werden,
dadurch **gekennzeichnet**, dass
die nematische Flüssigkristall-Zusammensetzung zumindest eine Verbindung mit (a) Endgruppenstruktur(en) der folgenden allgemeinen Formel (I) als erste Komponente umfasst: 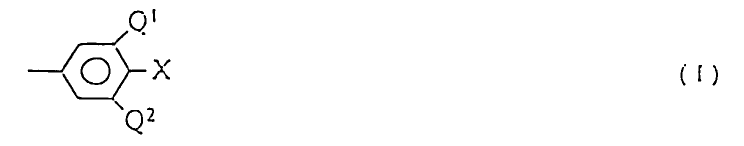 (worin X F, Cl, CF₃, OCF₃, CF₂H, OCF₂H, OCF₂CF₂H, OCF₂Cl oder OCF₂CFHCF₃, Q¹ und Q² unabhängig voneinander H oder F sind) und dass zumindest eine Verbindung, ausgewählt aus der Gruppe von Verbindungen mit den allgemeinen Formeln (II), (III) und (IV) als zweite Komponente enthalten ist:
R²-(G)-Z⁷-(J)-R³ (II)
(worin R² und R³ jeweils unabhängig eine Alkylgruppe oder Fluoralkylgruppe mit 1 bis 10 Kohlenstoffatomen sind, worin wahlweise eine oder nicht benachbarte zwei oder mehr als zwei Methylengruppen durch ein Sauerstoffatom oder -CH=CH- substituiert sein können; G und J unabhängig jeweils trans1,4-Cyclohexylen, 1,4-Phenylen oder Pyrimidin-2,5-diyl sind; und Z⁷ -CH₂CH₂-, -COO-, -CH=CH-, -C≡C- oder eine Einfachbindung ist);
R⁴-(K)-Z⁸-(L)-Z⁹-(M)-R⁵ (III)
(worin R⁴ und R⁵ jeweils unabhängig eine Alkylgruppe oder Fluoralkylgruppe mit 1 bis 10 Kohlenstoffatomen sind, worin wahlweise eine oder nicht benachbarte zwei oder mehr Methylengruppen durch ein Sauerstoffatom oder -CH=CH- substituiert sein können; K trans-1,4-Cyclohexylen, 1,4-Phenylen oder Pyrimidin-2,5-diyl ist; L und M jeweils unabhängig trans-1,4-Cyclohexylen oder 1,4-Phenylen bedeuten, die wahlweise durch F an einer Verzweigung substituiert sein können, Z⁸ und Z⁹ jeweils unabhängic -CH₂CH₂-, -CH=CH-, -C≡C-,
-COO- oder eine Einfachbindung sind); und 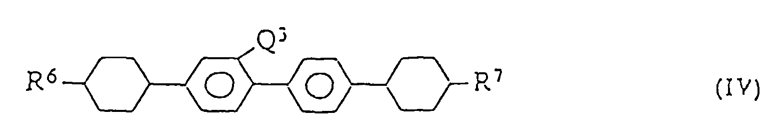 (worin R⁶ und R⁷ jeweils unabhängig eine Alkylgruppe oder eine Fluoralkylgruppe mit 1 bis 10 Kohlenstoffatomen sind, worin wahlweise eine oder nicht benachbarte zwei oder mehr als zwei Methylengruppen durch ein Sauerstoffatom oder -CH=CH- substituiert sein können; und Q³ H oder F ist), und dass eine oder mehr als eine Verbindungen ausgewählt aus der Gruppe von Verbindungen mit den allgemeinen Formeln (VI-a), (VI-b), (VI-c), (VI-d) und (VI-e) als dritte Komponente enthalten sind: 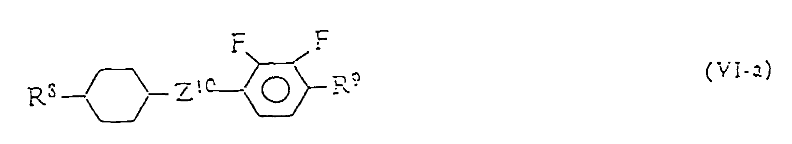 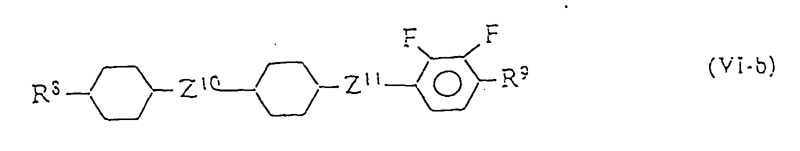 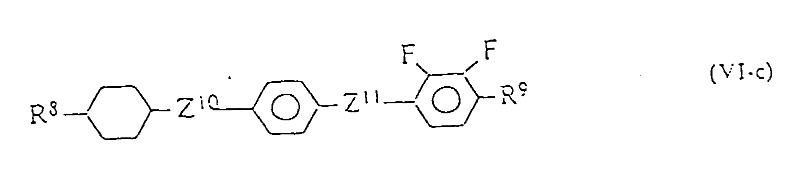 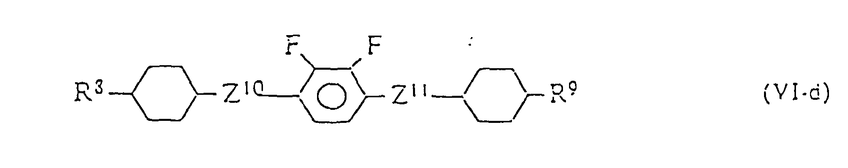 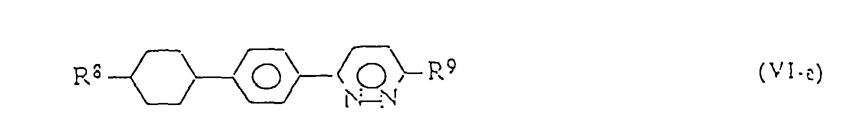 (worin R⁸ eine Alkylgruppe oder Fluoralkylgruppe mit 1 bis 10 Kohlenstoffatomen ist, worin wahlweise eine oder nicht benachbarte zwei oder mehr als zwei Methylengruppen durch ein Sauerstoffatom oder -CH=CH- substituiert sein können, R⁹ eine Alkylgruppe oder Fluoralkylgruppe mit 1 bis 10 Kohlenhstoffatomen, worin wahlweise eine oder nicht benachbarte zwei oder mehr als zwei Methylengruppen durch ein Sauerstoffatom oder -CH=CH- substituiert sein können, CF₃ oder CF₂H ist, Z¹⁰ oder Z¹¹ unabhängig voneinander -CH₂CH₂-, -COO- oder eine Einfachbindung sind.

## Revendications

1. Elément d'affichage à cristaux liquides à courbure ou biréfringence compensée optiquement (OCB) à attaque active, dans lequel
a) une cellule hermétique formée de deux substrats comportant des électrodes transparentes est utilisée,
b) un mélange de cristaux liquides nématiques présentant une anisotropie diélectrique positive et une résistance élevée est contenu dans la cellule,
c) les directions de frottement de membranes alignées appliquées sur les deux substrats supérieur et inférieur sont réalisées suivant la même direction (un angle de torsion de 0°),
d) un agencement est réalisé de sorte qu'un premier angle constitué par une direction de pré-inclinaison des cristaux liquides sur les membranes alignées et les substrats soit de +θ et l'autre soit de -θ,
e) un film bi-axial de phase différente est disposé sur le dessus du substrat supérieur parmi les substrats supérieur et inférieur de la cellule, et des plaques polarisées sont disposées au- dessus et au-dessous de la cellule contenant le film bi-axial de phase différente disposé, et
f) des pixels respectifs dans la cellule hermétique sont commutés,
caractérisé en ce que ladite composition de cristaux liquides nématiques contient au moins un composé comportant une ou plusieurs structures de groupements terminaux de formule générale suivante (I) 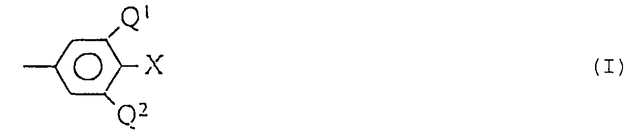 (dans laquelle, X représente F, Cl, CF₃, OCF₃, CF₂H, OCF₂H, OCF₂CF₂H, OCF₂Cl ou OCF₂CFHCF₃, Q¹ et Q² représentent indépendamment chacun H ou F) en tant que premier constituant.

2. Elément d'affichage à cristaux liquides selon la revendication 1, caractérisé en ce que le composé de formule générale (I) est un composé exprimé par les formules générales (I-a), (I-b) et (I-c) 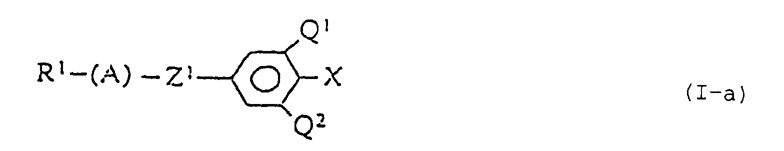 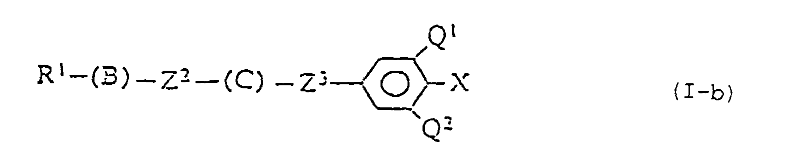 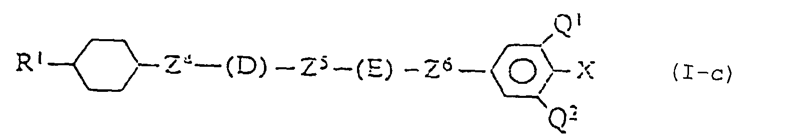 (dans lesquelles R¹ représente un groupement alkyle ou un groupement fluoroalkyle comportant de 1 à 10 atomes de carbone, dans lesquels un groupement méthylène optionnel ou deux ou plus de deux groupements méthylène (-CH₂) non adjacents peuvent être substitués facultativement par un ou des atomes d'oxygène ou par -CH=CH-, X représente F, Cl, CF₃, OCF₃, CF₂H, OCF₂H, OCF₂CF₂H, OCF₂Cl ou OCF₂CFHCF₃, Q¹ et Q² représentent indépendamment l'un de l'autre H ou F, Z¹, Z², Z³, Z⁴, Z⁵ et Z⁶ représentent indépendamment chacun -CH₂CH₂-, -(CH₂)₄-, -COO-, -CF₂O-, -CH=CH- ou une simple liaison, A, B, C, D et E représentent indépendamment l'un de l'autre le trans-1,4-cyclohexylène, la pyrimidine-2,5-diyle, le 1,4-cyclohexénylène ou le 1,4-phénylène facultativement substitués par F au niveau d'un H latéral).

3. Elément d'affichage à cristaux liquides selon la revendication 1 ou 2, caractérisé en ce qu'une quantité du premier constituant utilisé est de 50 à 100 % en poids sur la base du poids total de la composition de cristaux liquides.

4. Elément d'affichage à cristaux liquides à courbure ou biréfringence compensée optiquement (OCB) à attaque active dans lequel
a) une cellule hermétique formée de deux substrats comportant des électrodes transparentes est utilisée,
b) un mélange de cristaux liquides nématiques présentant une anisotropie diélectrique positive et une résistance élevée est contenu dans la cellule,
c) les directions de frottement de membranes alignées appliquées sur les deux substrats supérieur et inférieur sont réalisées dans la même direction (un angle de torsion de 0°),
d) un agencement est réalisé de sorte qu'un premier angle constitué par une direction de pré-inclinaison des cristaux liquides sur les membranes alignées et les substrats soit de +θ et l'autre soit de -θ,
e) un film bi-axial de phase différente est disposé sur le dessus du substrat supérieur parmi les substrats supérieur et inférieur de la cellule, et des plaques polarisées sont disposées au-dessus et au-dessous de la cellule contenant le film bi-axial de phase différente disposé, et
f) des pixels respectifs dans la cellule hermétique sont commutés,
caractérisé en ce que ladite composition de cristaux liquides nématiques contient au moins un composé comportant une ou des structures de groupements terminaux de formule générale suivante (I) 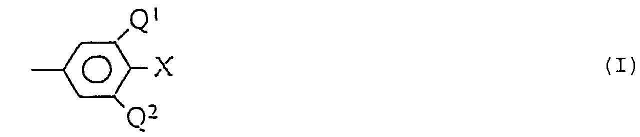 (dans laquelle, X représente F, Cl, CF₃, OCF₃, CF₂H, OCF₂H, OCF₂CF₂H, OCF₂Cl ou OCF₂CFHCF₃, Q¹ et Q² représentent indépendamment l'un de l'autre H ou F) en tant que premier constituant et en ce qu'au moins un composé choisi parmi les groupes de composés représentés par les formules générales (II), (III) et (IV) est contenu en tant que second constituant :
R²-(G)-Z⁷-(J)-R³ (II)
(dans laquelle, R² et R³ représentent indépendamment l'un de l'autre un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un ou des atomes d'oxygène ou -CH=CH-, G et J représentent indépendamment l'un de l'autre le trans-1,4-cyclohexylène, le 1,4-phénylène ou la pyrimidine-2,5-diyle, et Z⁷ représente -CH₂CH₂-, -COO-, -CH=CH-, -C≡C- ou une simple liaison),
R⁴-(K)-Z⁸-(L)-Z⁹-(M)-R⁵ (III)
(dans laquelle, R⁴ et R⁵ représentent independamment l'un de l'autre un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un ou des atomes d'oxygène ou -CH=CH-, K représente le trans-1,4-cyclohexylène, le 1,4-phénylène ou la pyrimidine-2,5-diyle, L et M représentent indépendamment l'un de l'autre le trans-1,4-cyclohexylène ou le 1,4-phénylène substitués facultativement par F au niveau d'un H latéral, Z⁸ et Z⁹ représentent indépendamment l'un de l'autre -CH₂CH₂-, -CH=CH-, -C≡C-, -COO- ou une simple liaison), et 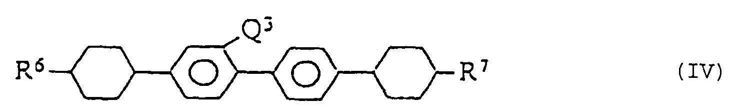 (dans laquelle, R⁶ et R⁷ représentent indépendamment l'un de l'autre un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un ou des atomes d'oxygène ou -CH=CH-, et Q³ représente H ou F).

5. Elément d'affichage à cristaux liquides selon la revendication 4,
caractérisé en ce que la quantité du second constituant utilisé est de 40 % ou moins de 40 % en poids sur la base du poids total de la composition de cristaux liquides.

6. Elément d'affichage à cristaux liquides à courbure ou biréfringence compensée optiquement (OCB) à attaque active, dans lequel
a) une cellule hermétique formée de deux substrats comportant des électrodes transparentes est utilisée,
b) un mélange de cristaux liquides nématiques présentant une anisotropie diélectrique positive et une résistance élevée est contenu dans la cellule,
c) les directions de frottement de membranes alignées appliquées sur les deux substrats supérieur et inférieur sont réalisées dans la même direction (un angle de torsion de 0°),
d) un agencement est réalisé de sorte qu'un premier angle constitué par une direction de pré-inclinaison des cristaux liquides sur les membranes alignées et les substrats soit de +θ et l'autre soit de -θ,
e) un film bi-axial de phase différente est disposé sur le dessus du substrat supérieur parmi les substrats supérieur et inférieur de la cellule, et des plaques polarisées sont disposées au-dessus et au-dessous de la cellule contenant le film bi-axial de phase différente disposé, et
f) des pixels respectifs dans la cellule hermétique sont commutés,
caractérisé en ce que ladite composition de cristaux liquides nématiques contient au moins un composé comportant une ou des structures de groupements terminaux de formule générale suivante (I) 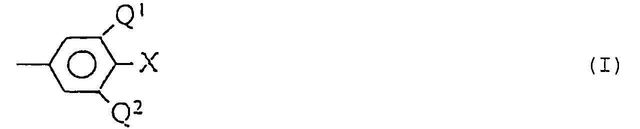 (dans laquelle, X représente F, Cl, CF₃, OCF₃, CF₂H, OCF₂H, OCF₂CF₂H, OCF₂Cl ou OCF₂CFHCF₃, Q¹ et Q² représentent indépendamment l'un de l'autre H ou F) en tant que premier constituant et en ce qu'au moins un composé sélectionné parmi le groupe de composés représentés par les formules générales (II), (III) et (IV) est contenu en tant que second constituant :
R²-(G)-Z⁷-(J)-R³ (II)
(dans laquelle, R² et R³ représentent indépendamment l'un de l'autre un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un ou des atomes d'oxygène ou -CH=CH-, G et J représentent indépendamment l'un de l'autre le trans-1,4-cyclohexylène, le 1,4-phénylène ou la pyrimidine-2,5-diyle, et Z⁷ représente -CH₂CH₂-, -COO-, -CH=CH-, -C≡C- ou une simple liaison),
R⁴-(K)-Z⁸-(L)-Z⁹-(M)-R⁵ (III)
(dans laquelle, R⁴ et R⁵ représentent indépendamment l'un de l'autre un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un ou des atomes d'oxygène ou -CH=CH-, K représente le trans-1,4-cyclohexylène, le 1,4-phénylène ou la pyrimidine-2,5-diyle, L et M représentent indépendamment l'un de l'autre le trans-1,4-cyclohexylène ou le 1,4-phénylène substitués facultativement par F au niveau d'un H latéral, Z⁸ et Z⁹ représentent indépendamment l'un de l'autre -CH₂CH₂-, -CH=CH-, -C≡C-, -COO- ou une simple liaison), et 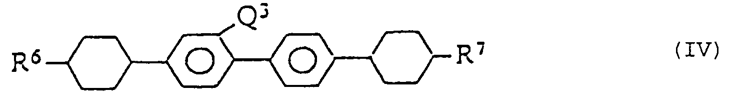 (dans laquelle, R⁶ et R⁷ représentent indépendamment l'un de l'autre un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un ou des atomes d'oxygène ou -CH=CH-, et Q³ représente H ou F) et en ce qu'un ou plus d'un composé choisis parmi le groupe de composés représentés par les formules générales (VI-a), (VI-b), (VI-c), (VI-d) et (VI-e) sont contenus en tant que troisième constituant : 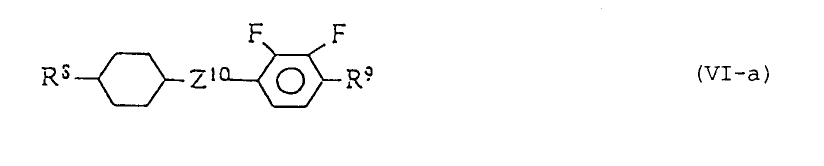 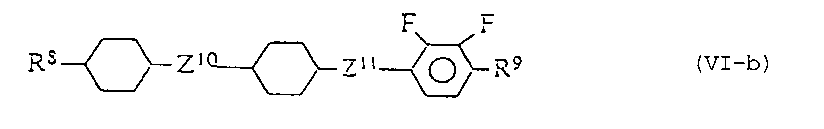 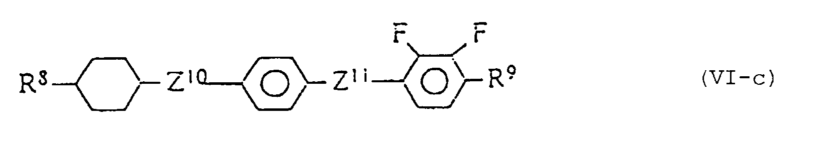 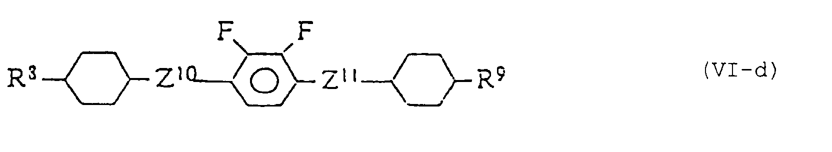 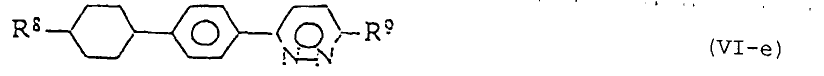 (dans lesquelles, R⁸ représente un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un ou des atomes d'oxygène ou -CH=CH-, R⁹ représente un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un atome d'oxygène ou -CH=CH-, CF₃ ou CF₂H, Z¹⁰ et Z¹¹ représentent indépendamment l'un de l'autre -CH₂CH₂-, -COO- ou une simple liaison).

7. Elément d'affichage à cristaux liquides selon la revendication 6,
caractérisé en ce qu'une quantité du troisième constituant utilisé est de 20 % ou moins de 20 % sur la base du poids total de la composition de cristaux liquides.

8. Elément d'affichage à cristaux liquides selon l'une quelconque des revendications 1 à 7, caractérisé en ce que la région de phase nématique dans la composition de cristaux liquides est de 60°C ou au-dessus de 60°C, l'anisotropie optique Δn est de 0,1 ou de plus de 0,1, le rapport de constante élastique K₃/K₁ d'un mode d'évasement et d'un mode de courbure est de 1,7 ou de moins de 1,7, et l'anisotropie diélectrique Δε est de 5,0 ou de plus de 5,0.

9. Utilisation d'une composition de cristaux liquides dans un élément d'affichage à cristaux liquides à courbure ou biréfringence compensée optiquement (OCB) à attaque active, dans laquelle
a) une cellule hermétique formée de deux substrats comportant des électrodes transparentes est utilisée,
b) un mélange de cristaux liquides nématiques présentant une anisotropie diélectrique positive et une résistance élevée est contenu dans la cellule,
c) les directions de frottement de membranes alignées appliquées sur les deux substrats supérieur et inférieur sont réalisées dans la même direction (un angle de torsion de 0°),
d) un agencement est réalisé de sorte qu'un premier angle constitué par une direction de pré-inclinaison des cristaux liquides sur les membranes alignées et les substrats soit de +θ et l'autre soit de -θ,
e) un film bi-axial de phase différente est disposé sur le dessus du substrat supérieur parmi les substrats supérieur et inférieur de la cellule, et des plaques polarisées sont disposées au-dessus et au-dessous de la cellule contenant le film bi-axial de phase différente disposé, et
f) des pixels respectifs dans la cellule hermétique sont commutés,
caractérisée en ce que ladite composition de cristaux liquides nématiques contient au moins un composé comportant une ou plusieurs structures de groupements terminaux de formule générale suivante (I) 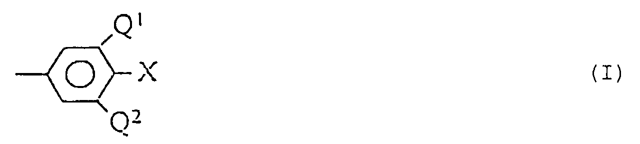 (dans laquelle, X représente F, Cl, CF₃, OCF₃, CF₂H, OCF₂H, OCF₂CF₂H, OCF₂Cl ou OCF₂CFHCF₃, Q¹ et Q² représentent indépendamment l'un de l'autre H ou F) en tant que premier constituant.

10. Utilisation d'une composition de cristaux liquides dans un élément d'affichage à cristaux liquides à courbure ou biréfringence compensée optiquement (OCB) à attaque active, dans laquelle
a) une cellule hermétique formée de deux substrats comportant des électrodes transparentes est utilisée,
b) un mélange de cristaux liquides nématiques présentant une anisotropie diélectrique positive et une résistance élevée est contenu dans la cellule,
c) les directions de frottement de membranes alignées appliquées sur les deux substrats supérieur et inférieur sont réalisées dans la même direction (un angle de torsion de 0°),
d) un agencement est réalisé de sorte qu'un premier angle constitué par une direction de pré-inclinaison des cristaux liquides sur les membranes alignées et les substrats soit de +θ et l'autre soit de -θ,
e) un film bi-axial de phase différente est disposé sur le dessus du substrat supérieur parmi les substrats supérieur et inférieur de la cellule, et des plaques polarisées sont disposées au-dessus et au-dessous de la cellule contenant le film bi-axial de phase différente disposé, et
f) des pixels respectifs dans la cellule hermétique sont commutés,
caractérisée en ce que ladite composition de cristaux liquides nématiques contient au moins un composé comportant une ou des structures de groupements terminaux de formule générale suivante (I) 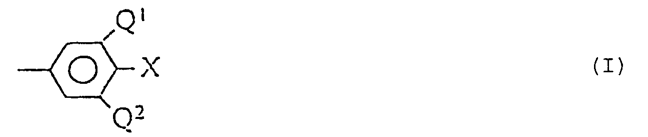 (dans laquelle, X représente F, Cl, CF₃, OCF₃, CF₂H, OCF₂H, OCF₂CF₂H, OCF₂Cl ou OCF₂CFHCF₃, Q¹ et Q² représentent indépendamment l'un de l'autre H ou F) en tant que premier constituant et en ce qu'au moins un composé choisi parmi le groupe de composés représentés par les formules générales (II), (III) et (IV) est contenu en tant que second constituant :
R²-(G)-Z⁷-(J)-R³ (II)
(dans laquelle, R² et R³ indiquent indépendamment l'un de l'autre un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un ou des atomes d'oxygène ou -CH=CH-, G et J représentent indépendamment l'un de l'autre le trans-1,4-cyclohexylène, le 1,4-phénylène ou la pyrimidine-2,5-diyle, et Z⁷ représente -CH₂CH₂-, -COO-, -CH=CH-, -C≡C- ou une simple liaison),
R⁴-(K)-Z⁸-(L)-Z⁹-(M)-R⁵ (III)
(dans laquelle, R⁴ et R⁵ représentent indépendamment l'un de l'autre un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un ou des atomes d'oxygène ou -CH=CH-, K représente le trans-1,4-cyclohexylène, le 1,4-phénylène ou la pyrimidine-2,5-diyle, L et M représentent indépendamment l'un de l'autre le trans-1,4-cyclohexylène ou le 1,4-phénylène substitués facultativement par F au niveau d'un H latéral, Z⁸ et Z⁹ représentent indépendamment l'un de l'autre -CH₂CH₂-, -CH=CH-, -C≡C-, -COO- ou une simple liaison), et 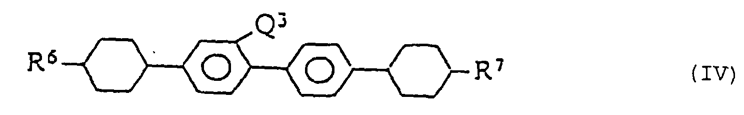 (dans laquelle, R⁶ et R⁷ représentent indépendamment l'un de l'autre un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un ou des atomes d'oxygène ou -CH=CH-, et Q³ représente H ou F).

11. Utilisation d'une composition de cristaux liquides dans un élément d'affichage à cristaux liquides à courbure ou biréfringence compensée optiquement (OCB) à attaque active, dans laquelle
a) une cellule hermétique formée de deux substrats comportant des électrodes transparentes est utilisée,
b) un mélange de cristaux liquides nématiques présentant une anisotropie diélectrique positive et une résistance élevée est contenu dans la cellule,
c) les directions de frottement de membranes alignées appliquées sur les deux substrats supérieur et inférieur sont réalisées dans la même direction (un angle de torsion de 0°),
d) un agencement est réalisé de sorte qu'un premier angle constitué par une direction de pré-inclinaison des cristaux liquides sur les membranes alignées et les substrats soit de +θ et l'autre soit de -θ,
e) un film bi-axial de phase différente est disposé sur le dessus du substrat supérieur parmi les substrats supérieur et inférieur de la cellule, et des plaques polarisées sont disposées au-dessus et au-dessous de la cellule contenant le film bi-axial de phase différente disposé, et
f) des pixels respectifs dans la cellule hermétique sont commutés,
caractérisé en ce que ladite composition de cristaux liquides nématiques contient au moins un composé comportant une ou des structures de groupements terminaux de formule générale suivante (I) 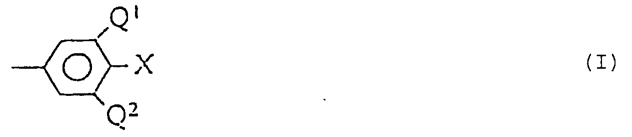 (dans laquelle, X représente F, Cl, CF₃, OCF₃, CF₂H, OCF₂H, OCF₂CF₂H, OCF₂Cl ou OCF₂CFHCF₃, Q¹ et Q² représentent indépendamment l'un de l'autre H ou F) en tant que premier constituant et en ce qu'au moins un composé choisi parmi le groupe de composés représentés par les formules générales (II), (III) et (IV) est contenu en tant que second constituant :
R²-(G)-Z⁷-(J)-R³ (II)
(dans laquelle, R² et R³ représentent indépendamment l'un de l'autre un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un ou des atomes d'oxygène ou -CH=CH-, G et J représentent indépendamment l'un de l'autre le trans-1,4-cyclohexylène, le 1,4-phénylène ou la pyrimidine-2,5-diyle, et Z⁷ représente -CH₂CH₂-, -COO-, -CH=CH-, -C≡C- ou une simple liaison),
R⁴-(K)-Z⁸-(L)-Z⁹-(M)-R⁵ (III)
(dans laquelle, R⁴ et R⁵ représentent indépendamment l'un de l'autre un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un ou des atomes d'oxygène ou -CH=CH-, K représente le trans-1,4-cyclohexylène, le 1,4-phénylène ou la pyrimidine-2,5-diyle, L et M représentent indépendamment l'un de l'autre le trans-1,4-cyclohexylène ou le 1,4-phénylène substitués facultativement par F au niveau d'un H latéral, Z⁸ et Z⁹ représentent indépendamment l'un de l'autre -CH₂CH₂-, -CH=CH-, -C≡C-, -COO- ou une simple liaison), et 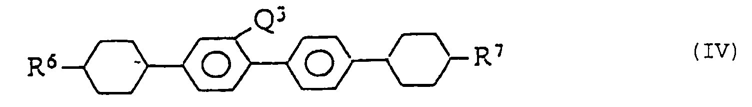 (dans laquelle, R⁶ et R⁷ représentent indépendamment l'un de l'autre un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un ou des atomes d'oxygène ou -CH=CH-, et Q³ représente H ou F) et en ce qu'un ou plus d'un composé choisis parmi le groupe de composés représentés par les formules générales (VI-a), (VI-b), (VI-c), (VI-d) et (VI-e) sont contenus en tant que troisième constituant : 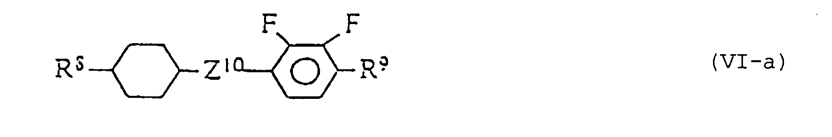 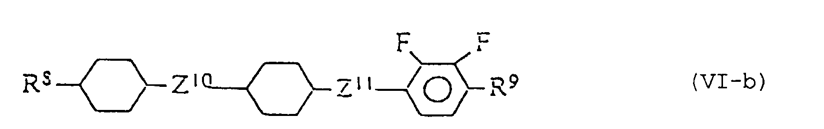 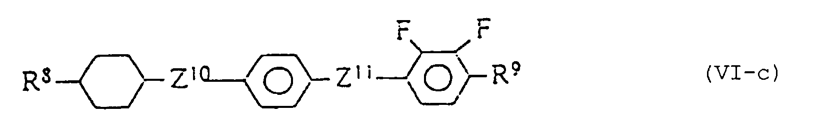 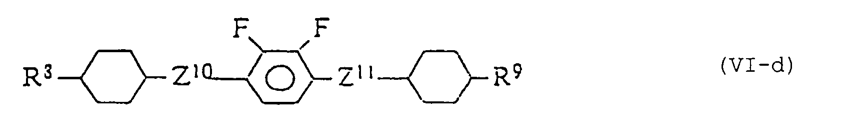 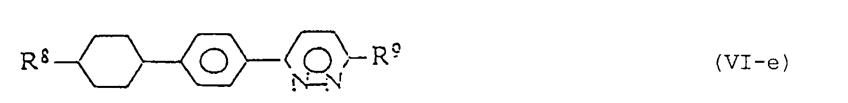 (dans lesquelles, R⁸ représente un groupement alkyle ou un groupement fluoroalkyle comportant de 1 à 10 atomes de carbone, dans lesquels un groupement méthylène optionnel ou deux ou plus de deux groupements méthylène noir adjacents peuvent être substitués par un ou des atomes d'oxygène ou -CH=CH-, R⁹ représente un groupement alkyle ou un groupement fluoroalkyle comportant de 1 à 10 atomes de carbone, dans lesquels un groupement méthylène optionnel ou deux ou plus de deux groupements méthylène non adjacents peuvent être substitués par un atome d'oxygène ou -CH=CH-, CF₃ ou CF₂H, Z¹⁰ et Z¹¹ représentent indépendamment l'un de l'autre -CH₂CH₂-, -COO- ou une simple liaison).
